# EUROPÄISCHE PATENTSCHRIFT

(11) **EP 0 563 077 B1**
(45) Veröffentlichungstag und Bekanntmachung des Hinweises auf die Patenterteilung: **16.07.1997**
(21) Anmeldenummer: 92900110.5
(22) Anmeldetag: 05.12.1991
(51) Int. Cl.: G06F 17/30

(54) **VERFAHREN ZUM MASCHINELLEN ERMITTELN VON IN ZWEI DATENFOLGEN ENTHALTENEN GLEICHEN DATENELEMENTEN**
METHOD OF DETECTING, BY COMPUTING MACHINE, IDENTICAL DATA ELEMENTS IN TWO DATA SEQUENCES
PROCEDE POUR LA DETERMINATION MECANISEE D'ELEMENTS DE DONNEES IDENTIQUES CONTENUS DANS DEUX SEQUENCES DE DONNEES

(30) Priorität: 19.12.1990 DE 4040714
(43) Veröffentlichungstag der Anmeldung: 06.10.1993
(73) Patentinhaber: Winkler, Jürgen, Dr. Prof., D-83620 Feldkirchen-Westerham (DE)
(72) Erfinder: WINKLER, Jürgen, Dr., D-8151 Feldkirchen-Westerham (DE); WEIGAND, Rosemarie, D-8000 München 83 (DE)
(86) Internationale Anmeldenummer: DE9100949
(87) Internationale Veröffentlichungsnummer: WO9211601

(56) Entgegenhaltungen:
- EP-A- 0 380 239
- COMMUNICATIONS OF THE ACM Bd. 21, Nr. 4, April 1978, PALO ALTO, CALIFORNIA, U. S.A. Seiten 264 - 268; P. HECKEL: 'A technique for isolating differences between files'
- PROCEEDINGS OF THE 1987 INTERNATIONAL CONFERENCE ON PARALLEL PROCESSING 21. August 1987, PENNSYLVANIA Seiten 78 - 80; E.EDMISTON ET AL.: 'parallelization of the dynamic programming algorithm for comparison of sequences'

## Beschreibung

Die Erfindung betrifft ein Verfahren zum Ermitteln von in zwei Datenfolgen enthaltenen gleichen Datenelementen, welche paarweise einander als gleich zugeordnet werden, indem eines der Datenelemente von einer der Datenfolgen einem gleichen Datenelement von der anderen Datenfolge zugewiesen wird.

Beispielsweise bei Programmentwicklungen ist es vorteilhaft, die Unterschiede verschiedener Programmversionen maschinell zu erfassen und zu dokumentieren. Häufig kommen dabei blockweise Umstellungen von Instruktionen vor. Eingefügte Instruktionen, gleiche Blöcke von Instruktionen, umgestellte Reihenfolge für Blöcke von Instruktionen, weggelassene Instruktionen, usw. werden aus Dokumentationsgründen häufig quantitativ beispielsweise für Statistiken und qualitativ beispielsweise für Kontrollen von Korrekturen benötigt. Gleiches gilt für die Wartung und Handhabung von Datenfeldern und Dateien. Das zu untersuchende Datenelement wird dabei häufig von einem für den Vergleich nicht benötigten Informationsgehalt losgelöst, beispielsweise durch eine Filterung oder Umrechnung. Fallweise können beim Vergleich von Programmversionen Kommentare und überflüssige Zwischenräume unterdrückt werden. Das Vergleichsverfahren kann dann auf dem Ergebnis der Filterung bzw. Umrechnung erfolgen, während die Protokollierung aus Gründen der besseren Lesbarkeit in der Originalform erfolgt.

Der Autor Paul Heckel beschreibt unter dem Titel ,,A Technique for Isolating Differences between Files", in der Zeitschrift ,,Communications of the Association for Computing Machinery", CACM, Vol. 21, Nr. 4, April 1978, auf den Seiten 264 bis 268 ein derartiges Verfahren.

In einem Lauf 1 (Pass 1) werden dabei von einer ersten Datei (file N) die zu untersuchenden Datenelemente eingelesen und es wird für jedes Datenelement ein Hashcodierungseintrag erzeugt. Die Häufigkeit des Hashcodierungseintrages wird jeweils mit einem Zähler (counter NC) gezählt. In einem Datenfeld (array NA) wird für jede Zeile ein Zeiger gesetzt zum jeweiligen Hashcodierungseintrag.

In einem Lauf 2 werden von einer zweiten Datei (file 0) die zu untersuchenden Datenelemente in einer gleichen Weise eingelesen, wobei ein weiterer Zähler (counter OC), und ein weiteres Datenfeld (array OA) verwendet wird. Ein Hilfsfeld (OLNO) enthält die Zeilennummer des Datenelementes beim Hashcodierungseintrag.

In einem Lauf 3 werden die nur einmal vorkommenden Datenelemente (NC=OC=1) einander zugewiesen, wobei in den Datenfeldern (NA, OA) der Zeiger auf den Hashcodierungseintrag ersetzt wird durch eine Zeilennummer.

In einem Lauf 4 wird in einer aufsteigenden Sequenz überprüft, ob die jeweils auf die einander zugewiesenen Datenelemente aufsteigend folgenden Datenelemente einen gleichen Hashcodierungseintrag aufweisen. Bei Übereinstimmung wird jeweils der Zeiger auf den gleichen Hashcodierungseintrag in den Datenfeldern (NA, OA) ersetzt durch die Zeilennummer.

In einem Lauf 5 wird in einer absteigenden Sequenz überprüft, ob die jeweils auf die einander zugewiesenen Datenelemente absteigend folgenden Datenelemente einen gleichen Hashcodierungseintrag aufweisen. Bei Übereinstimmung wird jeweils der Zeiger auf den gleichen Hashcodierungseintrag in den Datenfeldern (NA, OA) ersetzt durch die Zeilennummer.

In einem abschließenden Lauf (final pass) werden die zugewiesenen Datenelemente und die nicht auf diese Weise zuweisbaren Datenelemente protokolliert und ausgegeben.

Bei einer detaillierten Analyse der möglichen Probleme wird darauf hingewiesen, daß ein gleicher Hashcodierungseintrag noch keine Gleichheit der Datenelemente bedeutet. Eine doppelte Hashcodierungstechnik wird diskutiert zur Verbesserung dieser Situation. Ebenso diskutiert wird eine Quersummentechnik zur Registrierung dieser Ungenauigkeiten des Verfahrens. Auch wird ein zusätzlicher Lauf (extra pass) vorgeschlagen zum Löschen der Zuweisungen für einzelne, singulär zugewiesene Datenelemente (single line blocks).

Eine Zuweisung eines Datenelementes einer Datenfolge zu einem Datenelement der zweiten Datenfolge bewirkt stets eine Zuordnung. Diese Zuordnung erfolgt als eine Zuweisung indem eine erfolgte Zuordnung zweier Datenelemente mittels eines jeweiligen Verweises, beispielsweise in Form eines Zeigers, in den Datenfeldern als eine erfolgte Zuweisung dargestellt wird.

Die Aufgabe der Erfindung besteht darin, ein Arbeitsverfahren anzugeben zum maschinellen Ermitteln von in zwei Datenfolgen enthaltenen gleichen Datenelementen, so daß eine maximale Anzahl von einander zugewiesenen Datenelementen erzielbar wird.

Diese Aufgabe wird gelöst durch ein Arbeitsverfahren zum maschinellen Ermitteln von in zwei Datenfolgen enthaltenen gleichen Datenelementen mit den Merkmalen des Patentanspruchs 1.

Aus den Unteransprüchen ergeben sich Weiterbildungen und bevorzugte Ausführungsformen der Erfindung.

Der Erfindung liegt die Erkenntnis zugrunde, daß eine maximale Anzahl von Zuweisungen erzielbar ist. Insbesondere bei längeren Datenfolgen mit vielen gleichen Datenelementen sollen diese Zuweisungen im Sinne von bevorzugten vorteilhaften Ausführungsformen der Erfindung so erfolgen, daß in mehreren Verfahrensschritten schrittweise die Zuweisung durchgeführt wird, sodaß successive insbesondere mittels auswählbarer Methoden zur Auswahl von Zuweisungsbereichen innerhalb dieser eine für den jeweiligen Zuweisungsbereich maximale Anzahl von Zuweisungen erfolgt. Im jeweiligen Zuweisungsbereich soll in Iterationsschritten ein jeweils größtmöglicher Zuweisungsblock gesucht und zugewiesen werden, bis im jeweils zu bearbeitenden Zuweisungsbereich keine weitere Zuweisung mehr möglich ist. Erst dann soll der nächste Zuweisungsbereich ebenso iterativ bearbeitet werden. Nachdem die nach einer bestimmten Methode aufbereiteten Zuweisungsbereiche alle bearbeitet sind, können nach einer weiteren Methode Zuweisungsbereiche aufbereitet und, wie bereits erläutert, iterativ bearbeitet werden. Als ein abschließendes Zuweisungsverfahren sollen als Zuweisungsbereich die gesamten Datenfolgen verwendet werden. Indem stets ein als erster vorgefundener größtmöglicher Zuweisungsblock von allenfalls mehreren gleich großen zugewiesen wird, ist dieses Zuweisungsverfahren in einer vorteilhaften Weise symmetrisch bezüglich einer Vertauschung beider Datenfolgen.

In einem ersten Zuweisungsverfahren können nach dem eingangs erläuterten Verfahren einzelne in beiden Datenfolgen vorkommende Datenelemente zugewiesen werden. Für die dabei noch nicht zugewiesenen Datenelemente kann ein zweites Zuweisungsverfahren durchgeführt werden, bei welchem innerhalb von sequentiell assoziierten Zuweisungslücken, welche jeweils von bereits zugewiesenen Datenelementen begrenzt sind, jeweils iterativ ein größtmöglicher Zuweisungsblock gesucht und zugeordnet wird. Für die vom ersten und vom zweiten Zuweisungsverfahren noch nicht zugewiesenen Datenelemente kann ein drittes Zuweisungsverfahren durchgeführt werden, bei welchem als Zuweisungsbereiche die Dateigrenzen der gesuchten Dateien gelten. Zur besseren qualitativen Erfassung von Blöcken aus gleichen Datenelementen und von Blöcken aus ungleichen Datenelementen hat sich dieses dreistufige Verfahren als vorteilhaft erwiesen, insbesondere für blockweise umgestellte Programmversionen und deren Vergleich. In jedem von den vorgegebenen Zuweisungsbereichen wird jeweils iterativ nach jeweils einem größtmöglichen Zuweisungsblock gesucht, welcher in beiden Datenfolgen im jeweiligen Zuweisungsbereich aus zusammenhängend aufeinanderfolgenden zuweisbaren Datenelementen gebildet wird. Falls im Zuweisungsbereich bei einem Iterationsschritt beispielsweise mehrere gleichgroße derartige Zuweisungsblöcke vorgefunden werden, so können beispielsweise zunächst die Datenelemente des ersten derartigen Zuweisungsblockes einander zugewiesen werden. Beim nächsten Iterationsschritt wird nach weiteren zuweisbaren Zuweisungsblöcken gesucht, und die Datenelemente des jeweils größtmöglichen vorgefundenen Zuweisungsblockes werden einander zugewiesen. Bei mehreren gleich großen vorgefundenen Zuweisungsblöcken während eines Iterationsschrittes kann es vorgesehen sein, daß stets der erste vorgefundene Zuweisungsblock von gleich großen vorgefundenen Zuweisungsblöcken zugewiesen wird.

Die Auswahl von vorzugebenden Zuweisungsbereichen soll so erfolgen, daß zunächst ein bestimmtes Zuweisungsverfahren durchgeführt wird und für die dabei noch nicht zugewiesenen Datenelemente wird als zweites ein weiteres Zuweisungsverfahren ausgeführt. Die bereits zugewiesenen Datenelemente können die Zuweisungsbereiche begrenzen. Dies kann beispielsweise so vorgesehen sein, daß zwei zugewiesene Datenelemente in der ersten Datenfolge den Zuweisungsbereich begrenzen, und daß in der zweiten Datenfolge jene Datenelemente den Zuweisungsbereich begrenzen, welche jenen beiden Datenelementen der ersten Datenfolge zugewiesen sind. Beispielsweise bei umgekehrter Reihenfolge dieser Datenelemente in den beiden Datenfolgen kann vorgesehen sein, daß der Zuweisungsbereich stets innerhalb der Datenelemente in beiden Datenfolgen vorgegeben wird.

Eine bevorzugte Ausführungsform der Erfindung ist gekennzeichnet durch solche Zuweisungsbereiche, welche durch jeweils einander zugewiesene Datenelemente begrenzt werden. Dadurch können in einer vorteilhaften Weise jene Zuweisungen aufgefunden werden, welche von blockweisen Umstellungen direkt betroffen sind.

Eine weitere bevorzugte Ausführungsform der Erfindung ist dadurch gekennzeichnet, daß vorgefundene Zuweisungslücken, welche durch jeweils beliebig zugewiesene Datenelemente begrenzt werden, sequentiell assoziativ einander als Zuweisungsbereiche zugewiesen werden. Dadurch können in einer vorteilhaften Weise jene Zuweisungen aufgefunden werden, welche von blockweisen Umstellungen nicht betroffen sind. Dies ist unabhängig davon, welchem der begrenzenden Datenelemente der einen Datenfolge das jeweils andere begrenzende Datenelement der anderen Daten folge nun tatsächlich zugeordnet ist. Derartige Zuweisungsbereiche, welche sich also nicht überlappen oder überschneiden, werden sequentiell assoziierte Zuweisungsbereiche genannt.

Eine weitere bevorzugte Ausführungsform der Erfindung ist dadurch gekennzeichnet, daß bestimmte als Abschnittsmarkierungen vorgefundene Datenelemente zur Begrenzung von Zuweisungsbereichen verwendet werden. Dadurch können in einer vorteilhaften Weise jene Zuweisungen aufgefunden werden, welche innerhalb von abschnittsweise getrennten Teilen der Datenfolgen enthalten sind. Bestimmte Datenelemente können gesucht, beispielsweise "procedure begin" - Anweisungen, oder Anweisungen zum Markieren von Programmabschnitten oder Datenabschnitten und als Begrenzung dienen. Auch kann beispielsweise eine bestimmte Anzahl von Datenelementen einen Zuweisungsbereich bilden.

Eine weitere bevorzugte Ausführungsform der Erfindung ist gekennzeichnet durch ein abschließendes Zuweisungsverfahren, bei welchem als der Zuweisungsbereich die beiden gesamten Datenfolgen verwendet werden. In diesem größtmöglichen Zuweisungsbereich wird iterativ nach jeweils einem größtmöglichen Zuweisungsblock gesucht, wie zuvor erläutert. In diesem Fall wird in einer vorteilhaften Weise die maximale Zahl von zugewiesenen Datenelementen stets erreicht. Deshalb soll dieses Zuweisungsverfahren mit dem größtmöglichen Zuweisungsbereich auch das abschließende Zuweisungsverfahren sein. Vor diesem abschließenden Zuweisungsverfahren kann ein vorhergehendes Zuweisungsverfahren durchgeführt sein, dessen Zuweisungsbereiche kleiner vorgegeben gewesen sind, beispielsweise begrenzt durch zugewiesene Datenelemente, welche von einem vor diesem Zuweisungsverfahren beispielsweise nach dem eingangs erläuterten Verfahren zugewiesen sind. Das abschließende Zuweisungsverfahren ist ebenso vorteilhaft anwendbar, ohne daß ein anderes Zuweisungsverfahren vorausgegangen ist, und auch ohne daß davor bereits einzelne Datenelemente oder Blöcke von Datenelementen zugewiesen sind. Das Ermitteln von in zwei Datenfolgen enthaltenen gleichen Datenelementen soll stets das abschlies sende Zuweisungsverfahren enthalten. Davor können zusätzlich auch mehrere Zuweisungsverfahren durchgeführt werden.

Eine bevorzugte Ausführungsform der Erfindung ist dadurch gekennzeichnet, daß ein Hashcodierungsverfahren durchgeführt wird, bei welchem zu jedem Hashcodierungseintrag ein Verweis auf die hierbei eingetragenen Datenelemente erzeugt wird, so daß bei einem Vergleich die Datenelemente über einen gleichen Hashcodierungseintrag vorsortiert aufgefunden werden, und nachfolgend ein direkter Vergleich der Datenelemente erfolgt. Zur vorteilhaften Beschleunigung des Vergleichs erfolgt für die Datenelemente eine Hashcodierung. Es soll beim Hashcodierungsverfahren erkannt werden, ob zwei Datenelemente einen gleichen Hashcodierungseintrag aufweisen. Über den gleichen Hashcodierungseintrag können die Datenelemente in einer vorteilhaften Weise vorsortiert aufgefunden werden. Der entscheidende Vergleich auf Gleichheit soll anschließend anhand der Datenelemente selbst erfolgen, welche über einen Verweis aufgefunden werden können, welcher jeweils dem Hashcodierungseintrag vorteilhaft angefügt werden kann. Beispielsweise kann jedem Hashcodierungseintrag eine Liste von Datenblöcken angekettet sein, aus denen die Textinformation zum jeweiligen Hashcodierungseintrag entnehmbar ist. Es kann eine jeweils eigene Datenstruktur für Datenblöcke mit einer Volltextinformation vorgesehen sein und eine eigene Datenstruktur für Datenblöcke mit einer gefilterten Klartextinformation. Ebenso kann eine an einen Hashcodierungseintrag angekettete Liste auch als eine gemischte Liste vorgesehen sein aus Datenblöcken mit Volltextinformation oder Klartextinformation, falls also derselbe Hashcodierungsvektor zur Durchführung der Hashcodierung von Volltextinformation und Klartextinformation verwendet wird.

Eine weitere bevorzugte Ausführungsform der Erfindung ist dadurch gekennzeichnet,
a) daß für eine erste der zu vergleichenden Datenfolgen ein erster Elementdeskriptorfeldvektor verwendet wird, welcher für jedes Datenelement der ersten Datenfolge je ein zugeordnetes erstes Elementdeskriptorfeld aufweist, für welches zusätlich ein Verweis auf das Elementdeskriptorfeld eines nächsten gleichen Datenelementes vorgesehen ist,
b) daß für eine zweite der zu vergleichenden Datenfolgen ein zweiter Elementdeskriptorfeldvektor verwendet wird, welcher für jedes Datenelement der zweiten Datenfolge je ein zugeordnetes zweites Elementdeskriptorfeld aufweist, für welches zusätzlich ein Verweis auf das erste Elementdeskriptorfeld eines zugewiesenen gleichen Datenelementes vorgesehen ist,
c) daß für beide zu vergleichenden Datenfolgen ein Textdeskriptorfeldvektor verwendet wird, welcher für alle gleichen Datenelemente aus beiden Datenfolgen je ein gemeinsames zugeordnetes Textdeskriptorfeld aufweist, für welches folgende Komponenten vorgesehen sind:
Verweis auf das erste Elementdeskriptorfeld der ersten Datenfolge für das jeweilige erste zugeordnete Datenelement, Verweis auf das letzte Elementdeskriptorfeld der zweiten Datenfolge für das jeweilige letzte zugeordnete Datenelement, Eintrag der Gesamtanzahl vom zugeordneten Datenelement innerhalb der ersten Datenfolge, Eintrag der Gesamtanzahl vom zugeordneten Datenelement innerhalb der zweiten Datenfolge, Eintrag der zu vergleichenden Textinformation des zugeordneten Datenelementes.
Es erfolgt eine vorteilhaft verwendbare interne Repräsentation der zu vergleichenden Datenelemente mittels der Verweise und Einträge in den Elementdeskriptorfeldern und im Textdeskriptorfelde zur vorteilhaften Unterstützung des Zuweisungsverfahrens, insbesondere für die Suche nach Zuweisungsblöcken.

Eine weitere bevorzugte Ausführungsform der Erfindung ist dadurch gekennzeicnet,
a) daß für beide zu vergleichenden Datenfolgen ein Hashcodierungsvektor gebildet wird, welcher für jede codierte Textinformation einen Hashcodierungseintrag aufweist,
b) daß zu jedem Hashcodierungseintrag ein Verweisvektor gebildet wird, welcher einen Verweis auf jenes Textdeskriptorfeld aufweist, in welchem die jeweils hashcodierte Textinformation enthalten ist, so daß bei unterschiedlicher Textinformation und gleichem Hashcodierungseintrag im Verweisvektor als eine jeweils weitere Komponente ein Verweis auf ein Textdeskriptorfeld eingetragen wird.
In vorteilhafter Weise können dadurch die zu vergleichenden Datenelemente als Texte nur einmal gespeichert werden. Die Textinformation von mehrfach vorkommenden Datenelementen soll nur einmal gespeichert werden. Dadurch kann vor allem auch Speicherplatz eingespart werden.

Jeder einzelne der genannten Datenfeldvektoren kann auch in Form einer verketteten Liste von Datenblöcken organisiert sein. Der jeweilige Datenblock kann in einem solchen Fall aus dem jeweiligen Datenfeld und einer zusätzlichen Kettungsinformation bestehen, welche beispielsweise am Anfang des jeweiligen Datenblockes stets enthalten ist. Ein erster Datenblock einer derartigen verketteten Liste kann als ein Listenkopf aufgebaut sein und beispielsweise eine Anzahl von angeketteten Datenblöcken enthalten als eine Längenangabe für diese bestehende Liste. Eine derartige Längenangabe als eine Länge des Datenfeldvektors kann auch am Anfang eines jeden einzelnen der genannten Datenfeldvektoren vorgesehen sein.

Eine weitere bevorzugte Ausführungsform der Erfindung ist dadurch gekennzeichnet, daß Datenelemente einer Originaltextinformation bearbeitet werden, welche in einem Filterverfahren als die zu vergleichenden Datenelemente für das Zuweisungsverfahren aufbereitet werden.
In vorteilhafter Weise können dadurch die Datenelemente der Originaltextinformation vor dem Vergleich gefiltert werden. Der Vergleich kann dadurch vereinfacht durchgeführt werden.

Beispielsweise bei einigen Programmiersprachen ist ein freies Format für Instruktionen erlaubt, sodaß insbesondere eine beliebige Anzahl von Zwischenräumen eingefügt werden kann, beispielsweise zur Erzielung einer leichteren Lesbarkeit des Programmcodes. Auch kann eine Instruktion mitunter auf mehrere Datenelemente aufgeteilt sein. Bei derartigen Anwendungsfällen kann es vorgesehen sein, daß mittels des Filterverfahrens die Instruktionen in ein einheitliches Format gebracht werden, anhand dessen dann der Vergleich durchgeführt wird. In einigen Anwendungsfällen kann es auch vorgesehen sein, daß ein erläuternder Kommentar zu einzelnen Instruktionen beim Vergleich nicht berücksichtigt werden soll. Es kann also auch vorgesehen sein, daß von mehreren Datenelementen, beispielsweise bestehend aus einer Instruktion und mehreren Kommentaren nach der Durchführung des Filterverfahrens nur ein Datenelement übrigbleibt für den Vergleich.

Eine bevorzugte Ausführungsform der Erfindung ist dadurch gekennzeichnet, daß für jedes in den beiden Datenfolgen vorkommende zuweisbare unterschiedliche Datenelement seine Häufigkeit als Gesamtanzahl für jede von beiden Datenfolgen ermittelt wird, und daß daraus eine Maximalanzahl von zuweisbaren Datenelementen ermittelt wird, indem für alle zuweisbaten Datenelemente jene Häufigkeit für eine von den beiden Datenfolgen aufsummiert wird, welche kleiner gleich ist der Häufigkeit für die andere von den beiden Datenfolgen. Dadurch kann in einer vorteilhaften Weise die Gesamtanzahl von zuweisbaren Datenelementen durch diese Summenbildung errechnet werden. Diese Gesamtanzahl von zuweisbaren Datenelementen kann beispielsweise in einem Zuweisungszählerfeld in einem Aufbereitungsverfahren abgespeichert werden. Bei jeder einzelnen Zuweisung kann dann dieses Zuweisungszählerfeld dekrementiert werden. Sobald dieses Zuweisungszählerfeld auf Null heruntergezählt ist, kann demnach keine weitere Zuweisung mehr erfolgen. Ein laufendes Zuweisungsverfahren kann damit in einer vorteilhaften Weise abgebrochen werden.

Eine weitere bevorzugte Ausführungsform der Erfindung ist dadurch gekennzeichnet, daß sowie die Maximalanzahl von zugewiesenen Datenelementen erreicht ist, und somit keine weiteren Datenelemente mehr zuweisbar sind, ein Protokollierungsverfahren durchgeführt wird, bei welchem das Ergebnis ausgegeben wird. Dadurch kann in einer vorteilhaften Weise, beispielsweise bei einer Verwendung eines Zuweisungszählers, bei einer bereits erreichten Maximalanzahl von zugewiesenen Datenelementen ein laufendes Zuweisungsverfahren abgebrochen werden.

Eine weitere bevorzugte Ausführungsform der Erfindung ist dadurch gekennzeichnet, daß beim Protokollierungsverfahren ein Blockvergleich mittels Einträgen von Protokollierungsnummern zur Erkennung von blockweise umgestellten Teilen der Datenfolgen erfolgt. Dadurch kann in einer vorteilhaften Weise untersucht werden, ob und welche Teile der Datenfolgen blockweise umgestellt sind.

Die Erfindung wird anhand der Figuren näher erläutert, in welchen ein Ausführungsbeispiel enthalten ist.

Die Figur 1 zeigt ein Ablaufübersichtsflußdiagramm zum maschinellen Ermitteln von in zwei Datenfolgen enthaltenen gleichen Datenelementen.

Die Figur 2 zeigt einen ersten Elementeskriptorfeldvektor für eine erste der zu vergleichenden Datenfolgen.

Die Figur 3 zeigt einen zweiten Elementeskriptorfeldvektor für eine zweite der zu vergleichenden Datenfolgen.

Die Figur 4 zeigt einen Textdeskriptorfeldvektor für beide zu vergleichenden Datenfolgen.

Die Figur 5 zeigt einen Volltextvektor für beide zu vergleichenden Datenfolgen.

Die Figur 6 zeigt einen Hashcodierungsvektor mit Verweisvektoren und einen Volltexthashcodierungsvektor mit Volltextverweisvektoren für beide zu vergleichenden Datenfolgen.

Die Figur 7 zeigt einen Textdeskriptorfeldvektor, einen ersten und zweiten Elementeskriptorfeldvektor beim Aufbereitungsverfahren ohne Durchführung des Hashcodierungsverfahrens und ohne Filterverfahren.

Die Figur 8 zeigt einen Volltextvektor, einen Textdeskriptorfeldvektor, einen ersten und zweiten Elementeskriptorfeldvektor bei der Durchführung des Filterverfahrens ohne Hashcodierungsverfahren.

Die Figur 9 zeigt einen Hashcodierungsvektor, Verweisvektoren, einen Textdeskriptorfeldvektor, einen ersten und zweiten Elementeskriptorfeldvektor bei der Durchführung des Hashcodierungsverfahrens ohne Filterverfahren.

Die Figur 10 zeigt einen Volltextfeldvektor, einen Hashcodierungsvektor, Verweisvektoren, einen Volltexthashcodierungsvektor, Volltextverweisvektoren, einen Textdeskriptorfeldvektor, einen ersten und zweiten Elementeskriptorfeldvektor bei der Durchführung des Filterverfahrens und des Hashcodierungsverfahrens.

Die Figur 11 zeigt einen Textdeskriptorfeldvektor, einen ersten und zweiten Elementdeskriptorfeldvektor beim Beginn des ersten Zuweisungsverfahrens.

Die Figur 12 zeigt einen Textdeskriptorfeldvektor, einen ersten und zweiten Elementdeskriptorfeldvektor während des ersten Zuweisungsverfahrens.

Die Figur 13 zeigt einen Textdeskriptorfeldvektor, einen ersten und zweiten Elementdeskriptorfeldvektor am Ende des ersten Zuweisungsverfahrens.

Die Figur 14 zeigt den Textdeskriptorfeldvektor, den ersten und zweiten Elementdeskriptorfeldvektor beim zweiten Zuweisungsverfahren.

Die Figur 15 zeigt den ersten und zweiten Elementdeskriptorfeldvektor beim zweiten Zuweisungsverfahren.

Die Figur 16 zeigt ein Ablaufübersichtsflußdiagramm bei der Durchführung des zweiten Zuweisungsverfahrens.

Die Figur 17 zeigt ein Ablaufübersichtsflußdiagramm bei der Durchführung des dritten Zuweisungsverfahrens.

Die Figur 18 zeigt ein Ablaufübersichtsflußdiagramm von dem Blockvergleich.

In Zusammenhang mit den Figuren und der nachfolgenden Beschreibung wird dabei folgende Bezugszeichentabelle verwendet.

Bezugszeichentabelle:
- 10: erster Elementdeskriptorfeldvektor
- 11: erstes Elementdeskriptorfeld im ersten Elementdeskriptorfeldvektor
- 12: Statuseintrag im ersten Elementdeskriptorfeld
- 13: Markierungseintrag im ersten Elementdeskriptorfeld
- 14: Verweis im ersten Elementdeskriptorfeld auf ein Element deskriptorfeld eines nächsten gleichen Datenelementes
- 15: Verweis im ersten Elementdeskriptorfeld auf ein Textdes kriptorfeld des Datenelementes
- 16: Verweis im ersten Elementdeskriptorfeld auf ein Volltextfeld
- 17: Eintrag im ersten Elementdeskriptorfeld von einer Protokollierungsnummer für blockweise umgestellte Teile der beiden Datenfolgen
- 20: zweiter Elementdeskriptorfeldvektor
- 21: zweites Elementdeskriptorfeld im zweiten Elementdeskriptorfeldvektor
- 22: Statuseintrag im zweiten Elementdeskriptorfeld
- 23: Markierungseintrag im zweiten Elementdeskriptorfeld
- 24: Verweis im zweiten Elementdeskriptorfeld auf das erste Elementdeskriptorfeld eines zugewiesenen gleichen Datenelementes
- 25: Verweis im zweiten Elementdeskriptorfeld auf das Textdeskriptorfeld des Datenelementes
- 26: Verweis im zweiten Elementdeskriptorfeld auf ein Volltextfeld
- 27: Eintrag im zweiten Elementdeskriptorfeld von einer Protokollierungsnummer für blockweise umgestellte Teile der beiden Datenfolgen
- 30: Textdeskriptorfeldvektor
- 31: Textdeskriptorfeld
- 32: Verweis im Textdeskriptorfeld auf das erste Elementdeskriptorfeld für das erste zugeordnete Datenelement der ersten Datenfolge
- 33: Verweis im Textdeskriptorfeld auf das zweite Elementdeskriptorfeld für das letzte zugeordnete Datenelement der zweiten Datenfolge
- 34: Eintrag im Textdeskriptorfeld der Gesamtanzahl von zuge ordneten Datenelementen innerhalb der ersten Datenfolge
- 35: Eintrag im Textdeskriptorfeld der Gesamtanzahl von zuge ordneten Datenelementen innerhalb der zweiten Datenfolge
- 36: Eintrag im Textdeskriptorfeld der zu vergleichenden Textinformation des zugeordneten Datenelementes
- 40: Hashcodierungsvektor
- 41: Hashcodierungseintrag
- 50: Verweisvektor
- 51: Verweis auf das Textdeskriptorfeld
- 60: Volltexthashcodierungsvektor
- 61: Volltexthashcodierungseintrag
- 70: Volltextverweisvektor
- 71: Verweis auf das Volltextfeld
- 80: Volltextvektor
- 81: Volltextfeld
- 90: Aufbereitungsverfahren
- 100: Filterverfahren
- 200: Hashcodierungsverfahren
- 300: erstes Zuweisungsverfahren
- 400: zweites Zuweisungsverfahren
- 410, 420 ... 490: Verfahrensschritte des zweiten Zuweisungsverfahrens
- 500: drittes Zuweisungsverfahren
- 510, 520 ...581: Verfahrensschritte des dritten Zuweisungsverfahrens
- 600: Protokollierungsverfahren
- 610: Blockzuweisung
- 611, 612 ...617: Verfahrensschritte der Blockzuweisung
- 900: Abfrage auf zugewiesene Maximalanzahl

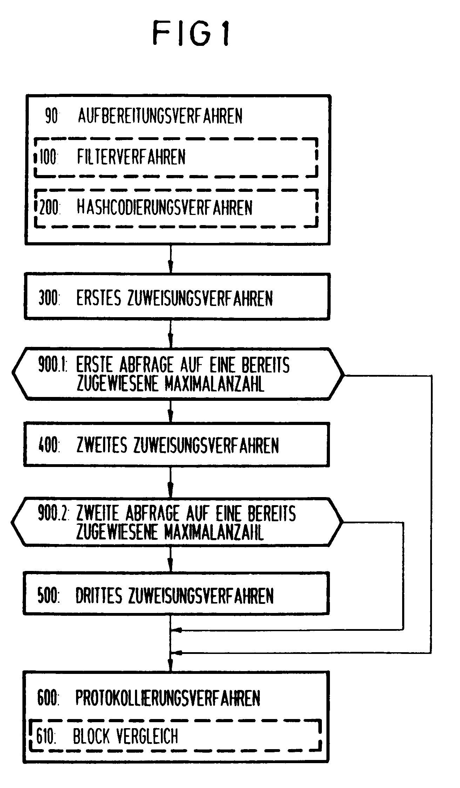

Wie die Figur 1 zeigt, ist zum maschinellen Ermitteln von in zwei Datenfolgen enthaltenen gleichen Datenelementen ein Aufbereitungsverfahren 90 vorgesehen, in welchem wahlweise ein Filterverfahren 100 ausgeführt wird, und in welchem ebenso ein Hashcodierungsverfahren 200 wahlweise ausgeführt werden kann. Danach folgt ein erstes Zuweisungsverfahren 300. Danach erfolgt eine erste Abfrage 900.1 auf eine bereits zugewiesene Maximalanzahl. Falls diese bereits erreicht ist, folgt ein Protokollierungsverfahren 600, anderenfalls folgt ein zweites Zuweisungsverfahren 400. Danach erfolgt eine zweite Abfrage 900.2 auf eine bereits zugewiesene Maximalanzahl. Falls diese bereits erreicht ist, folgt das Protokollierungsverfahren 600, anderenfalls folgt ein drittes Zuweisungsverfahren 500. Danach folgt das Protokollierungsverfahren 600, bei welchem das Ergebnis protokolliert wird, und bei welchem wahlweise eine Blockzuweisung 610 ausgeführt wird.

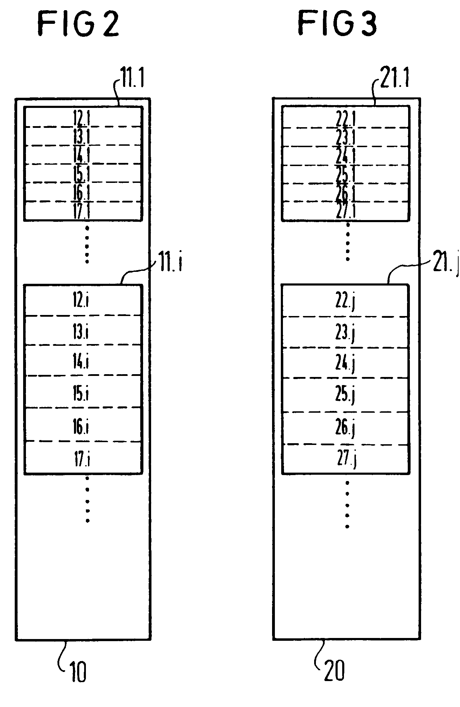

Wie die Figur 2 zeigt, ist ein erster Elementdeskriptorfeldvektor 10 für die erste der zu vergleichenden Datenfolgen aufgebaut aus mehreren ersten Elementdeskriptorfeldern 11, welche jeweils einem Datenelement zugeordnet werden. Diese Elementdeskriptorfelder 11 setzen sich jeweils zusammen aus einem Statuseintrag 12, einem Markierungseintrag 13, einem Verweis 14 auf das Elementdeskriptorfeld 11 eines nächsten gleichen Datenelementes, einem Verweis 15 auf ein Textdeskriptorfeld des jeweils zugeordneten Datenelementes. Falls beim Aufbereitungsverfahren 90 ein Filterverfahren 100 ausgewählt ist, so ist in jedem Elementdeskriptorfeld 11 zusätzlich ein sonst weglaßbarer Verweis 16 auf ein Volltextfeld des Datenelementes erforderlich. Falls beim Protokollierungsverfahren 600 ein Blockvergleich 610 ausgewählt ist, so ist in jedem Elementdeskriptorfeld 11 zusätzlich ein sonst weglaßbarer Eintrag 17 zur Speicherung einer Protokollierungsnummer erforderlich.

Jedes Elementdeskriptorfeld 11 wird in jener Weise verwendet, daß dieses je einem Datenelement der ersten zu vergleichenden Datenfolge zugeordnet wird, so daß ein erstes Datenelement der ersten Datenfolge einem ersten Elementdeskriptorfeld 11.1 zugeordnet wird, und ein i-tes Datenelement der ersten Datenfolge einem i-ten Elementdeskriptorfeld 11.i. Bei den Zuweisungsverfahren 300, 400 und 500 wird der Statuseintrag 12 in jedem Elementdeskriptorfeld 11 dazu verwendet, für jenes Datenelement, welches diesem Elementdeskriptorfeld 11 zugeordnet ist, seinen Status betreffend Zuweisbarkeit einzutragen. Falls demnach zu jenem Datenelement der ersten Datenfolge in der zweiten Datenfolge kein gleiches Datenelement enthalten ist, so daß jenem Datenelement der ersten Datenfolge kein Datenelement von der zweiten Datenfolge zugewiesen werden kann, so wird dies im Statuseintrag 12 gekennzeichnet. Falls hingegen in der zweiten Datenfolge zumindest ein Datenelement enthalten ist, welches jenem Datenelement der ersten Datenfolge gleich ist, und somit jenes Datenelement der ersten Datenfolge einem Datenelement der zweiten Datenfolge zugewiesen werden soll, so wird dies ebenfalls im Statuseintrag 12 gekennzeichnet.

Bei den Zuweisungsverfahren 300, 400 und 500 wird der Markierungseintrag 13 im Elementdeskriptorfeld 11 dazu verwendet, für jenes Datenelement, welches diesem Elementdeskriptorfeld 11 zugeordnet ist, eine Markierung betreffend eine bereits erfolgte Zuweisung einzutragen. Falls demnach jenes Datenelement der ersten Datenfolge einem Datenelement der zweiten Datenfolge zugewiesen werden soll, und dies noch nicht erfolgt ist, so wird dies im Markierungseintrag 13 gekennzeichnet Falls hingegen jenes Datenelement der ersten Datenfolge bereits einem Datenelement der zweiten Datenfolge zugewiesen ist, so wird dies ebenfalls im Markierungseintrag 13 gekennzeichnet.

Bei den Zuweisungsverfahren 300, 400 und 500 wird der Verweis 14 im Elementdeskriptorfeld 11 dazu verwendet, für jenes Datenelement, welches diesem Elementdeskriptorfeld 11 zugeordnet ist, einen Verweis 14 auf das Elementdeskriptorfeld 11 einzutragen, welches einem Datenelement der ersten Datenfolge zugeordnet ist, welches gleich jenem Datenelement der ersten Datenfolge ist, und welches als nächstes in der ersten Datenfolge enthalten ist. Falls hingegen kein derartiges nächstes nachfolgendes Datenelement in der ersten Datenfolge enthalten ist, wird kein derartiger Verweis 14 eingetragen, so daß dadurch dies gekennzeichnet ist.

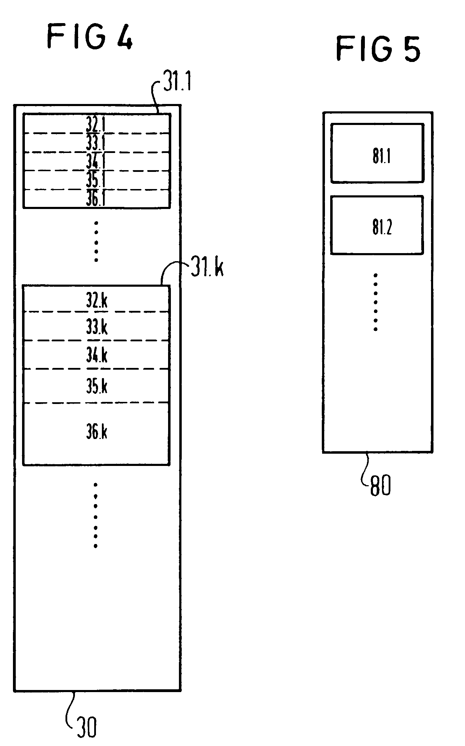

Beim Aufbereitungsverfahren 90 wird der Verweis 15 im Elementdeskriptorfeld 11 dazu verwendet, für jenes Datenelement, welches diesem Elementdeskriptorfeld 11 zugeordnet ist, einen Verweis 15 auf ein Textdeskriptorfeld einzutragen, welches nachfolgend insbesondere anhand von Figur 4 beschrieben wird.

Wie die Figur 3 zeigt, wird ein zweiter Elementdeskriptorfeldvektor 20 für die zweite der zu vergleichenden Datenfolgen verwendet. Der Elementdeskriptorfeldvektor 20 ist aufgebaut aus mehreren zweiten Elementdeskriptorfeldern 21. Diese setzen sich jeweils zusammen aus einem Statuseintrag 22, einem Markierungseintrag 23, einem Zuweisungseintrag 24, einem Verweis 25 auf ein Textdeskriptorfeld des Datenelementes. Falls beim Aufbereitungsverfahren 90 ein Filterverfahren 100 ausgewählt ist, so ist in jedem Elementdeskriptorfeld 21 zusätzlich ein sonst weglaßbarer Verweis 26 auf ein Volltextfeld des Datenelementes erforderlich. Falls beim Protokollierungsverfahren 600 ein Blockvergleich 610 ausgewählt ist, so ist in jedem Elementdeskriptorfeld 21 zusätzlich ein sonst weglaßbarer Eintrag 27 zur Speicherung einer Protokollierungsnummer erforderlich.

Jedes Elementdeskriptorfeld 21 wird in jener Weise verwendet, daß dieses je einem Datenelement der zweiten zu vergleichenden Datenfolge zugeordnet wird, so daß ein erstes Datenelement der ersten Daten folge einem ersten Elementdeskriptorfeld 21.1 zugeordnet wird, und ein j-tes Datenelement der zweiten Datenfolge einem j-ten Elementdeskriptorfeld 21.j.

Bei den Zuweisungsverfahren 300, 400 und 500 wird der Statuseintrag 22 in jedem Elementdeskriptorfeld 21 dazu verwendet, für jenes Datenelement, welches diesem Elementdeskriptorfeld 21 zugeordnet ist, seinen Status betreffend Zuweisbarkeit einzutragen. Falls demnach zu jenem Datenelement der zweiten Datenfolge in der ersten Datenfolge kein gleiches Datenelement enthalten ist, so daß jenem Datenelement der ersten Datenfolge kein Datenelement von der zweiten Datenfolge zugewiesen werden kann, so wird dies im Statuseintrag 22 gekennzeichnet. Falls hingegen in der ersten Datenfolge zumindest ein Datenelement enthalten ist, welches jenem Datenelement der zweiten Datenfolge gleicht, und somit jenes Datenelement der zweiten Datenfolge einem Datenelement der ersten Datenfolge zugewiesen werden soll, so wird dies ebenfalls im Statuseintrag 22 gekennzeichnet.

Bei den Zuweisungsverfahren 300, 400 und 500 wird der Markierungseintrag 23 im Elementdeskriptorfeld 21 dazu verwendet, für jenes Datenelement, welches diesem Elementdeskriptorfeld 21 zugeordnet ist, eine Markierung betreffend eine bereits erfolgte Zuweisung einzutragen. Falls demnach jenes Datenelement der zweiten Datenfolge einem Datenelement der ersten Datenfolge zugewiesen werden soll, und dies noch nicht erfolgt ist, so wird dies im Markierungseintrag 23 gekennzeichnet. Falls hingegen jenes Datenelement der zweiten Datenfolge bereits einem Datenelement der ersten Datenfolge zugewiesen ist, so wird dies ebenfalls im Markierungseintrag 23 gekennzeichnet.

Bei den Zuweisungsverfahren 300, 400 und 500 wird der Verweis 24 im Elementdeskriptorfeld 21 dazu verwendet, für jenes Datenelement, welches diesem Elementdeskriptorfeld 21 zugeordnet ist, einen Verweis 24 auf das erste Elementdeskriptorfeld 11 einzutragen, welches gleich jenem Datenelement der ersten Datenfolge ist, zu welchem jenes Datenelement der zweiten Datenfolge zugewiesen ist. Falls hingegen noch kein Datenelement der ersten Datenfolge zugewiesen ist, ist noch kein derartiger Verweis 24 eingetragen, so daß dadurch dies gekennzeichnet ist.

Beim Aufbereitungsverfahren 90 wird der Verweis 25 im Elementdeskriptorfeld 21 dazu verwendet, für jenes Datenelement, welches diesem Elementdeskriptorfeld 21 zugeordnet ist, einen Verweis 24 auf ein Textdeskriptorfeld einzutragen, welches nachfolgend insbesondere anhand von Figur 4 beschrieben wird.

Wie die Figur 4 zeigt, wird ein Textdeskriptorfeldvektor 30 für beide zu vergleichenden Datenfolgen verwendet. Der Textdeskriptorfeldvektor 30 ist aufgebaut aus mehreren Textdeskriptorfeldern 31. Diese setzen sich zusammen aus einem Verweis 32 auf das erste Elementdeskriptorfeld 11, welches einem Datenelement zugeordnet ist, welches in der ersten Datenfolge als ein erstes gleiches vorkommendes Datenelement enthalten ist, einem Verweis 33 auf das letzte Elementdeskriptorfeld 21, welches einem Datenelement zugeordnet ist, welches in der zweiten Datenfolge als ein letztes gleiches vorkommendes Datenelement enthalten ist, einem Eintrag 34 der Gesamtanzahl von gleichen Datenelementen innerhalb der ersten Datenfolge, einem Eintrag 35 der Gesamtanzahl von gleichen Datenelementen innerhalb der zweiten Datenfolge, einem Eintrag 36 einer Textinformation des Datenelementes, welches dem Textdeskriptorfeld 31 zugeordnet ist.

Das Textdeskriptorfeld 31 wird in jener Weise verwendet, daß dieses je einem Datenelement von einer oder beiden zu vergleichenden Datenfolgen zugeordnet wird. Gleichen Datenelementen wird dasselbe Textdeskriptorfeld 31 zugeordnet. Dies ist unabhängig davon, in welcher von beiden Datenfolgen das zugeordnete Datenelement enthalten ist. Ist also ein Datenelement der ersten Datenfolge gleich einem Datenelement der zweiten Datenfolge, so wird bei derartigen Datenelementen dasselbe Textdeskriptorfeld 31 zugeordnet. Ebenso wird für alle in einer der Datenfolgen enthaltenen Datenelemente dasselbe Textdeskriptorfeld 31 zugeordnet. Zwei unterschiedliche Datenelemente werden unterschiedlichen Textdeskriptorfeldern 31 jeweils zugeordnet. Dies ist ebenso unabhängig davon, in welcher von beiden Datenfolgen die beiden Datenelemente enthalten sind. Allen unterschiedlichen Datenelementen von jeder von beiden Datenfolgen werden also unterschiedliche Textdeskriptorfelder 31 zugeordnet.

Das erste Textdeskriptorfeld 11, welches einem Datenelement zugeordnet ist, welches einem der Textdeskriptorfelder 31 zugeordnet wird, erhält einen Verweis 15 auf dieses Textdeskriptorfeld 31. Alle Elementdeskriptorfelder 11, welche gleichen Datenelementen zugeordnet sind, erhalten demnach den gleichen Verweis 15 auf dasselbe Textdeskriptorfeld 31. Jedes zweite Elementdeskriptorfeld 21, welches einem Datenelement zugeordnet ist, welches einem der Textdeskriptorfelder 31 zugeordnet wird, erhält einen Verweis 25 auf dieses Textdeskriptorfeld 31. Alle Elementdeskriptorfelder 21, welche gleichen Datenelementen zugeordnet sind, erhalten demnach den gleichen Verweis 25 auf dasselbe Textdeskriptorfeld 31.

Beim Aufbereitungsverfahren 90 wird im Textdeskriptorfeld 31 der Verweis 32 eingetragen, welcher auf jenes Elementdeskriptorfeld 11 verweist, welches jenem Datenelement zugeordnet ist, welches ebenfalls dem Textdeskriptorfeld 31 zugeordnet ist, und welches in der ersten Datenfolge als ein erstes von mehreren gleichen Datenelementen enthalten ist, oder welches in der ersten Datenfolge nur einmal enthalten ist. Falls hingegen jenes Datenelement, welches dem Textdeskriptorfeld 31 zugeordnet ist, im Textdeskriptorfeld 34 keinen Eintrag aufweist, und somit in der ersten Datenfolge nicht enthalten ist, so wird kein Verweis 32 in das Textdeskriptorfeld 31 eingetragen, so daß dadurch dies gekennzeichnet ist.

Beim Aufbereitungsverfahren 90 wird im Textdeskriptorfeld 31 der Verweis 33 eingetragen, welcher auf jenes Elementdeskriptorfeld 21 verweist, welches jenem Datenelement zugeordnet ist, welches ebenfalls dem Textdeskriptorfeld 31 zugeordnet ist, und welches in der zweiten Datenfolge als ein letztes von mehreren gleichen Datenelementen enthalten ist, oder welches in der zweiten Datenfolge nur einmal enthalten ist. Falls hingegen jenes Datenelement, welches dem Textdeskriptorfeld 31 zugeordnet ist, in der zweiten Datenfolge nicht enthalten ist, so wird kein Verweis 32 in das Textdeskriptorfeld 31 eingetragen, so daß dadurch dies gekennzeichnet ist.

Beim Aufbereitungsverfahren 90 wird im Textdeskriptorfeld 31 der Eintrag 34 eingetragen, welcher gleich ist der Gesamtanzahl von jenen Datenelementen innerhalb der ersten Datenfolge, welche gleich dem Datenelement sind, welchem das Textdeskriptorfeld 31 zugeordnet ist. Falls jenes Datenelement, welches dem Textdeskriptorfeld 31 zugeordnet ist, in der ersten Datenfolge nicht enthalten ist, so wird als Eintrag 34 eine Null eingetragen, so daß dadurch dies gekennzeichnet ist.

Beim Aufbereitungsverfahren 90 wird im Textdeskriptorfeld 31 der Eintrag 35 eingetragen, welcher gleich ist der Gesamtanzahl von jenen Datenelementen innerhalb der zweiten Datenfolge, welche gleich dem Datenelement sind, welches dem Textdeskriptorfeld 31 zugeordnet ist. Falls jenes Datenelement, welches dem Textdeskriptorfeld 31 zugeordnet ist, in der zweiten Datenfolge nicht enthalten ist, so wird als Eintrag 35 eine Null eingetragen, so daß dadurch dies gekennzeichnet ist.

Beim Aufbereitungsverfahren 90 wird im Textdeskriptorfeld 31 der Eintrag 36 eingetragen, welcher gleich ist der Textinformation von jenem Datenelement, welches dem Textdeskriptorfeld 31 zugeordnet ist. Diese im Eintrag 36 eingetragene Textinformation wird bei einem direkten Vergleich auf Gleichheit von Datenelementen verwendet. Falls kein Filterverfahren 100 durchzuführen ist, so wird eine gesamte Textinformation, eine sog. Volltextinformation, eines zu vergleichenden Datenelementes von einer von beiden Datenfolgen als Eintrag 36 eingetragen. Falls ein Filterverfahren 100 durchzuführen ist, so wird eine gefilterte Textinformation eines zu vergleichenden Datenelementes von einer von beiden Datenfolgen als Eintrag 36 eingetragen. Häufig soll beispielsweise beim Vergleich zweier Programmversionen eine Kommentierung von Befehlen beim Vergleich ohne Berücksichtigung sein, so daß für die Durchführung des Vergleichs eine Volltextform der Datenelemente durch das Filterverfahren 100 umgewandelt wird in eine gefilterte Textform des Datenelementes, deren Textinformation keinen Kommentar aufweist, so daß beim Vergleich nur Befehlsfolgen verglichen werden. Durch das Filterverfahren 100 werden häufig Datenelemente mit einer gefilterten Textinformation erzeugt von einer unterschiedlichen Länge, und ebenso können auch die Datenelemente in der Volltextform eine unterschiedliche Länge aufweisen, so daß es für den Vergleich günstig ist am Beginn der Textinformation eine Längenangabe für die Textinformation zu erzeugen, so daß bei einer unterschiedlichen Länge unmittelbar eine Ungleichheit der zu vergleichenden Datenelemente bereits daran erkannt wird.

Wie die Figur 5 zeigt, wird beim Aufbereitungsverfahren 90 und insbesondere beim Filterverfahren 100 ein Volltextfeldvektor 80 verwendet für beide zu vergleichenden Datenfolgen. Der Volltextfeldvektor 80 ist aufgebaut aus mehreren Volltextfeldern 81, in welche die Volltextinformation von je einem Datenelement eingetragen wird. Jedem Volltextfeld 81 wird somit je ein Datenelement zugeordnet. Datenelemente mit einer gleichen Volltextinformation werden demselben Volltextfeld 81 zugeordnet. Im Elementdeskriptorfeld 11 wird der Verweis 16 auf dasjenige Volltextfeld 81 eingetragen, welchem dasselbe Datenelement zugeordnet ist, wie dem Elementdeskriptorfeld 11. Falls das Filterverfahren 100 nicht durchzuführen ist, wird der Volltextfeldvektor 80 nicht verwendet.

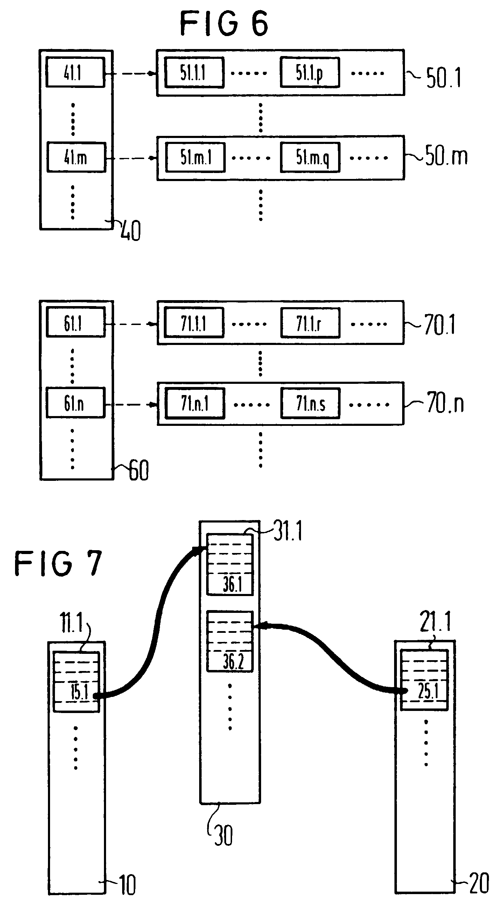

Wie die Figur 6 zeigt, wird beim Aufbereitungsverfahren 90 und insbesondere beim Hashcodierungsverfahren 200 ein Hashcodierungsvektor 40 verwendet für beide zu vergleichenden Daten folgen. Der Hashcodierungsvektor 40 ist aufgebaut aus mehreren Hashcodierungseinträgen 41.l,...41.m,..., in welche jeweils das Ergebnis bei einer Hashcodierung der Textinformation eines Datenelementes eingetragen wird. Falls kein Filterverfahren 100 durchzuführen ist, so ist diese beim Hashcodierungsverfahren 200 verwendete Textinformation des Datenelementes gleich der Volltextinformation des Datenelementes. Falls ein Filterverfahren 100 durchzuführen ist, so wird das Hashcodierungsverfahren 200 einerseits für die gefilterte Textinformation des Datenelementes und andererseits für die Volltextinformation des Datenelementes durchgeführt. Dies erfolgt bei diesem Ausführungsbeispiel in der Weise, daß das Ergebnis bei der Hashcodierung der gefilterten Textinformation als Hashcodierungseintrag 41 in den Hashcodierungsvektor 40 eingetragen wird, während das Ergebnis bei der Hashcodierung der Volltextinformation als ein Volltexthashcodierungseintrag 61 in einen Volltexthashcodierungsvektor 60 eingetragen wird.

In jedem Fall wird für jeden Hashcodierungseintrag 41 ein eigener und diesem zugeordneter Verweisvektor 50 verwendet. Jeder Verweisvektor 50 besteht aus wenigstens jeweils einem Verweis 51 auf das jeweilige Textdeskriptorfeld 31, welches jenem Datenelement zugeordnet ist, für welches das Hashcodierungsverfahren 200 jeweils durchgeführt wird, oder welches diesem Datenelement gleich ist. Falls beim Hashcodierungsverfahren 200 für zwei verschiedene Datenelemente ein gleicher Hashcodierungseintrag 41.m erhalten wird, so ist jedem der Datenelemente ein eigenes Textdeskriptorfeld 31 zuzuordnen. Mit Hilfe der Hashcodierungseinträge 51.m.l,..., 51.m.q, ...wird jenes Textdeskriptorfeld 31 jeweils aufgefunden, dessen Eintrag 36 der Textinformation mit der Textinformation des gerade hashcodierten Datenelementes verglichen wird. Bei Ungleichheit werden bereits vorhandene weitere Hashcodierungseinträge 51.m verwendet, um für einen jeweils weiteren Vergleich weitere Textdeskriptorfelder 31 aufzufinden, deren Eintrag 36 der Textinformation jeweils für den Vergleich verwendet wird. Falls alle Verweise 51.m des Verweisvektors 50.m untersucht sind, und keine Gleichheit des Eintrages 36 der Textinformation mit der Textinformation des gerade hashcodierten Datenelementes vorliegt, so wird ein weiterer Verweis 51.m im Verweisvektor 50.m erzeugt, welcher auf ein weiteres erzeugtes Textdeskriptorfeld 31 verweist, für welches als der Eintrag 36 die Textinformation des gerade hashcodierten Datenelementes eingetragen wird.

Bei der Durchführung des Filterverfahrens 100 wird für jeden hashcodierten Dateneintrag 41 ebenso ein eigener und diesem zugeordneter Verweisvektor 50 verwendet. Für jeden Volltexthashcodierungseintrag 61 wird in einer gleichen Weise ein eigener und diesem zugeordneter Volltextverweisvektor 70 verwendet, welcher ebenso wie der Verweisvektor 50 aus wenigstens jeweils einem Verweis 71 auf das Volltextfeld 81 besteht, welches in diesem Fall für den Vergleich der Volltextinformation verwendet wird.

Wie die Figur 7 zeigt, wird, falls kein Filterverfahren 100 und ebenso kein Hashcodierungsverfahren 200 durchzuführen ist, beim Aufbereitungsverfahren 90 der erste Elementdeskriptorfeldvektor 10, der zweite Elementdeskriptorfeldvektor 20 und der Textdeskriptorfeldvektor 30 auf folgende Weise verwendet.

Es werden bei diesem Ausführungsbeispiel die Datenelemente der ersten Datenfolge gemäß ihrer Reihenfolge innerhalb der ersten Datenfolge bearbeitet. Es wird für jedes Datenelement jeweils das erste Elementdeskriptorfeld 11 im ersten Elementdeskriptorfeldvektor 10 erzeugt. Danach wird der Textdeskriptorfeldvektor 30 untersucht. Falls im Textdeskriptorfeldvektor 30 ein Textdeskriptorfeld 31 vorgefunden wird, für welches die im Eintrag 36 vorgefundene Textinformation gleich ist der Textinformation des gerade bearbeiteten Datenelementes, so wird im Elementdeskriptorfeld 11 der Verweis 15 auf dieses Textdeskriptorfeld 31 eingetragen. Falls kein derartiges Textdeskriptorfeld 31 im Textdeskriptorfeldvektor 30 vorgefunden wird, so wird im Textdeskriptorfeldvektor 30 ein weiteres Textdeskriptorfeld 31 erzeugt, für welches im Eintrag 36 die Textinformation des gerade bearbeiteten Datenelementes eingetragen wird. In diesem Falle wird im Elementdeskriptorfeld 11 der Verweis 15 auf dieses soeben erzeugte Textdeskriptorfeld 31 eingetragen.

In der gleichen Weise werden die Datenelemente der zweiten Datenfolge gemäß ihrer Reihenfolge innerhalb der zweiten Datenfolge bearbeitet. Der Textdeskriptorfeldvektor 30 wird ebenfalls untersucht auf Textdeskriptorfelder 31, für welche die im Eintrag 36 vorgefundene Textinformation gleich ist der Textinformation des gerade bearbeiteten Datenelementes. Ebenso wird im Elementdeskriptorfeldvektor 20 für jedes bearbeitete Datenelement der zweiten Datenfolge je ein Elementdeskriptorfeld 21 erzeugt, für welches der Verweis 25 auf jenes Textdeskriptorfeld 31 eingetragen wird, dessen Eintrag 36 der Textinformation mit der Textinformation des gerade bearbeiteten Datenelementes übereinstimmt.

Bei diesem Ausführungsbeispiel wird dabei abwechselnd von jeder von beiden zu vergleichenden Datenfolgen je ein Datenelement bearbeitet.

Also das erste Datenelement der ersten Datenfolge, das erste Datenelement der zweiten Datenfolge, das zweite Datenelement der ersten Datenfolge, das zweite Datenelement der zweiten Datenfolge, usw.. Dadurch soll die Suche nach einer gleichen Textinformation in den Einträgen 36 beschleunigt werden, insbesondere für einen Vergleich von nahezu gleichen Datenfolgen, beispielsweise für zwei nur geringfügig unterschiedliche Programmversionen. Deshalb wird bei diesem Ausführungsbeispiel auch die Suche nach einem Eintrag 36 mit gleicher Textinformation jeweils beim zuletzt erzeugten Textdeskriptorfeld 31 begonnen und in Richtung der vorher erzeugten Textdeskriptorfelder 31 fortgesetzt bis eine Gleichheit der Textinformation vorgefunden wird oder nicht.

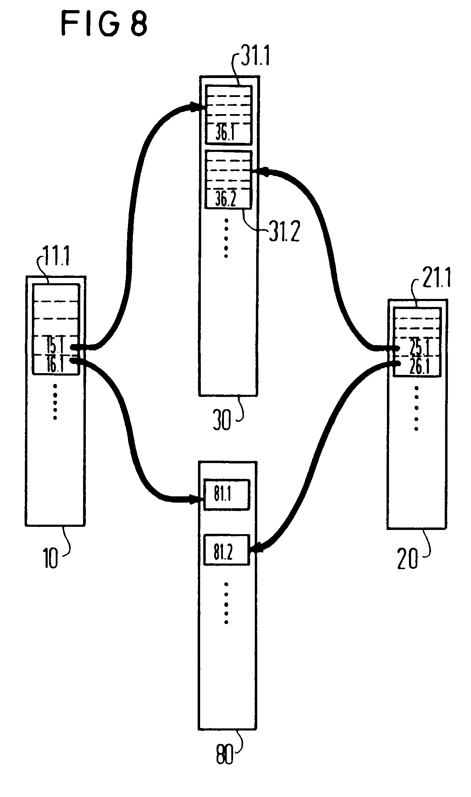

Wie die Figur 8 zeigt, wird, falls das Filterverfahren 100 durchzuführen ist, und das Hashcodierungsverfahren 200 nicht durchzuführen ist, beim Aufbereitungsverfahren 90 der erste Elementdeskriptorfeldvektor 10, der zweite Elementdeskriptorfeldvektor 20, der Textdeskriptorfeldvektor 30 und der Volltextverweisvektor 80 auf folgende Weise verwendet. Beispielsweise, falls die zu vergleichenden Datenelemente der beiden Datenfolgen nur kurze Texte sind, beispielsweise nur 4 Zeichen, oder beispielsweise nur aus Zahlenangaben bestehen, ist es häufig vorteilhaft auf die Durchführung des Hashcodierungsverfahrens 200 zu verzichten, welches in diesem Fall eine wesentliche Beschleunigung der Bearbeitung nicht mehr erbringen kann.

Es werden die Datenelemente der beiden zu vergleichenden Datenfolgen wie bereits erläutert gemäß ihrer Reihenfolge innerhalb der Datenfolge bearbeitet. Für jedes bearbeitete Datenelement wird in dem der Datenfolge zugeordneten Elementdeskriptorfeldvektor 10 oder 20 jeweils ein Elementdeskriptorfeld 11 oder 21 erzeugt. Die Volltextinformation des gerade bearbeiteten Datenelementes wird mit den Volltextfeldern 81 verglichen. Bei einer vorgefundenen Gleichheit wird im Elementdeskriptorfeld 11 oder 21 der Verweis 16 oder 26 auf dieses Volltextfeld 81 eingetragen. Falls kein gleiches Volltextfeld 81 vorgefunden wird, wird ein weiteres Volltextfeld 81 erzeugt gemäß der gerade bearbeiteten Volltextinformation, und der Verweis 16 oder 26 wird für dieses soeben erzeugte Volltextfeld 81 eingetragen. Mittels des Filterverfahrens 100 wird aus der Volltextinformation die gefilterte Textinformation des gerade bearbeiteten Datenelementes erzeugt. Diese wird, wie zuvor erläutert, mit dem Eintrag 36 der gefilterten Textinformation der Textdeskriptorfelder 31 des Textdeskriptorfeldvektors 30 verglichen. Bei Gleichheit wird der Verweis 15 oder 25 auf dieses Textdeskriptorfeld 31 eingetragen, anderenfalls auf ein weiteres erzeugtes Textdeskriptorfeld 31, für welches als Eintrag 36 die Textinformation des gerade bearbeiteten Datenelementes eingetragen wird.

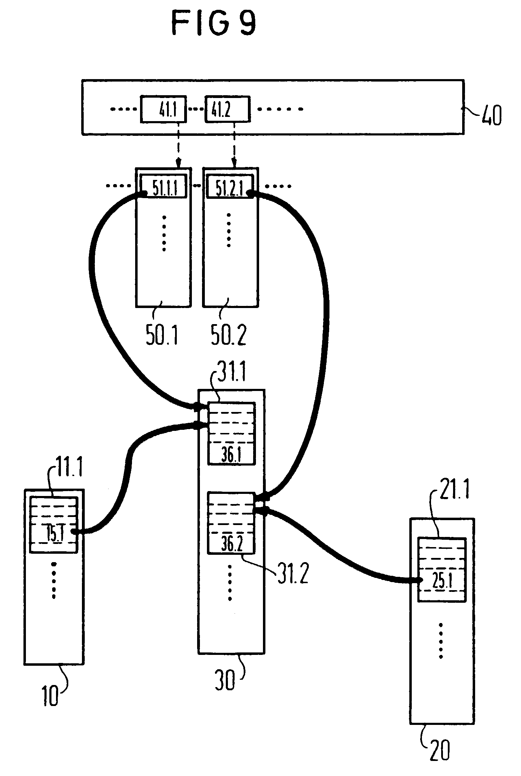

Wie die Figur 9 zeigt, werden, falls das Hashcodierungsverfahren 200 durchzuführen ist, und das Filterverfahren 100 nicht durchzuführen ist, beim Aufbereitungsverfahren 90 der erste Elementdeskriptorfeldvektor 10, der zweite Elementdeskriptorfeldvektor 20, der Textdeskriptorfeldvektor 30, der Hashcodierungsvektor 40 und Verweisvektoren 50 auf folgende Weise verwendet.

Es werden die Datenelemente der beiden zu vergleichenden Datenfolgen wie bereits erläutert gemäß ihrer Reihenfolge innerhalb der Datenfolge bearbeitet. Für die Textinformation des gerade bearbeiteten Datenelementes wird das Hashcodierungsverfahren 200 durchgeführt. Dabei wird als Ergebnis der Hashcodierungseintrag 41 erhalten. Für diesen Hashcodierungseintrag 41 wird der Hashcodierungsvektor 40 untersucht. Falls noch kein gleicher Hashcodierungseintrag 41 im Hashcodierungsvektor 40 vorgefunden wird, so wird dieser Hashcodierungseintrag 41 im Hashcodierungsvektor 40 eingetragen. Es wird in diesem Fall ein Verweisvektor 50 erzeugt, welcher dem Hashcodierungeintrag 41 zugeordnet wird. Im Verweisvektor 50 wird ein Verweis 51 auf jenes Textdeskriptorfeld 31 erzeugt, in welchem als Eintrag 36 jene Textinformation eingetragen ist, welche gleich ist der Textinformation des gerade bearbeiteten Datenelementes. Wie bereits erläutert, wird dieses Textdeskriptorfeld 31 nach einer Suche vorgefunden, oder, falls kein derartiges Textdeskriptorfeld 31 vorgefunden wird, dessen Eintrag 36 eine gleiche Textinformation aufweist, so wird ein weiteres Textdeskriptorfeld 31 erzeugt, dessen Eintrag 36 eine gleiche Textinformation erhält. Falls hingegen im Hashcodierungsvektor 40 bereits ein gleicher Hashcodierungseintrag 41 vorgefunden wird, so wird ebenso ein zugeordneter Verweisvektor 50 vorgefunden, dessen Verweise 51 auf Textdeskriptorfelder 31 überprüft werden, ob deren Einträge 36 mit der Textinformation des gerade bearbeiteten Datenelementes gleich ist oder, falls kein derartiges Textdeskriptorfeld 31 vorgefunden wird, so wird ein weiteres Textdeskriptorfeld 31 erzeugt, dessen Eintrag 36 eine gleiche Textinformation erhält. In jenem Elementdeskriptorfeldvektor 10 oder 20, welcher jener Datenfolge zugeordnet ist, deren Datenelement gerade bearbeitet wird, wird ein weiteres Elementdeskriptorfeld 11 oder 21 erzeugt, und es wird der Verweis 15 oder 25 eingetragen auf jenes Textdeskriptorfeld 31, dessen Eintrag 36 gleich ist der Textinformation des gerade bearbeiteten Datenelementes.

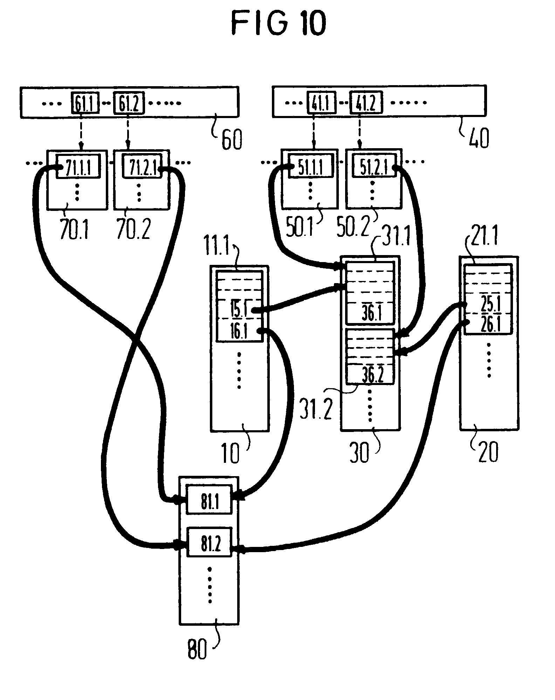

Wie die Figur 10 zeigt, werden, falls das Filterverfahren 100 und das Hashcodierungsverfahren 200 durchzuführen ist beim Aufbereitungsverfahren 90 der erste Elementedeskriptorfeldvektor 10, der zweite Elementedeskriptorfeldvektor 20, der Textdeskriptorfeldvektor 30, der Volltextfeldvektor 80, der Hashcodierungsvektor 40, die Verweisvektoren 50, der Volltexthashcodierungsvektor 60 und die Volltextverweisvektoren 70 auf folgende Weise verwendet.

Es werden die Datenelemente der beiden zu vergleichenden Datenfolgen wie bereits erläutert gemäß ihrer Reihenfolge innerhalb der Datenfolge bearbeitet. Für die Volltextinformation des gerade bearbeiteten Datenelementes wird das Hashcodierungsverfahren 200 durchgeführt. Dabei wird als Ergebnis der Volltexthashcodierungseintrag 61 erhalten. Für diesen Volltexthashcodierungseintrag 61 wird der Volltexthashcodierungsvektor 60 untersucht. Falls noch kein gleicher Volltexthashcodierungseintrag 61 im Volltexthashcodierungsvektor 60 vorgefunden wird, so wird dieser Volltexthashcodierungseintrag 61 im Volltexthashcodierungsvektor 60 eingetragen. Es wird in diesem Fall ein Volltextverweisvektor 70 erzeugt, welcher dem Volltexthashcodierungseintrag 61 zugeordnet wird. Im Volltextverweisvektor 70 wird ein Verweis 71 auf jenes Volltextfeld 81 eines Volltextfeldvektors 80 erzeugt, in welches jene Volltextinformation eingetragen ist, welche gleich ist der Volltextinformation des gerade bearbeiteten Datenelementes. Wie bereits erläutert, wird dieses Volltextfeld 81 nach einer Suche vorgefunden, oder, falls kein derartiges Volltextfeld 81 vorgefunden wird, dessen Volltextinformation gleich ist der Volltextinformation des gerade bearbeiteten Datenelementes, so wird ein weiteres Volltextfeld 81 erzeugt, welches die Volltextinformation des gerade bearbeiteten Datenelementes erhält. Falls hingegen im Volltexthashcodierungsvektor 60 bereits ein gleicher Volltexthashcodierungseintrag 61 vorgefunden wird, so wird ebenso ein zugeordneter Volltextverweisvektor 70 vorgefunden, dessen Verweise 71 auf Volltextfelder 81 überprüft werden, ob deren Volltextinformation mit der Volltextinformation des gerade bearbeiteten Datenelementes gleich ist, oder falls kein derartiges Volltextfeld 81 vorgefunden wird, so wird ein weiteres Volltextfeld 81 erzeugt, welches die Volltextinformation des gerade bearbeiteten Datenelementes erhält. In jenem Elementdeskriptorfeldvektor 10 oder 20, welcher jener Datenfolge zugeordnet ist, deren Datenelement gerade bearbeitet wird, wird ein weiteres Elementdeskriptorfeld 11 oder 21 erzeugt, und es wird der Verweis 16 oder 26 eingetragen auf jenes Volltextfeld 81, dessen Volltextinformation gleich ist der Volltextinformation des gerade bearbeiteten Datenelementes. Sobald das Hashcodierungsverfahren 200 für die Volltextinformation eines jeden Datenelementes der beiden zu vergleichenden Datenfolgen durchgeführt ist, und somit in jedem Elementdeskriptorfeld 11 oder 21 der Verweis 16 oder 26 eingetragen ist auf das jeweilige Volltextfeld 81, werden der Hashcodierungsvektor 60 und die Volltextverweisvektoren 70 nicht mehr benötigt, und der dafür benötigte Speicherplatz kann freigegeben werden.

Mittels des Filterverfahrens 100 wird aus der Volltextinformation die gefilterte Textinformation des gerade bearbeiteten Datenelementes erzeugt. Für die gefilterte Textinformation wird bei diesem Ausführungsbeispiel ebenfalls das Hashcodierungsverfahren 200 durchgeführt. Dabei wird als Ergebnis der Hashcodierungseintrag 41 erhalten. Für diesen Hashcodierungseintrag 41 wird der Hashcodierungsvektor 40 untersucht. Falls noch kein gleicher Hashcodierungseintrag 41 im Hashcodierungsvektor 40 vorgefunden wird, so wird dieser Hashcodierungseintrag 41 im Hashcodierungsvektor 40 eingetragen, und es wird ein Verweisvektor 50 erzeugt, welcher dem Hashcodierungseintrag 41 zugeordnet wird. Im Verweisvektor 50 wird ein Verweis 51 auf jenes Textdeskriptorfeld 31 erzeugt, in welchem als Eintrag 36 jene Textinformation eingetragen ist, welche gleich ist der Textinformation des gerade bearbeiteten Datenelementes. Wie bereits erläutert wird dieses Textdeskriptorfeld 31 nach einer Suche vorgefunden, oder, falls kein derartiges Textdeskriptorfeld 31 vorgefunden wird, dessen Eintrag 36 eine gleiche Textinformation aufweist, so wird ein weiteres Textdeskriptorfeld 31 erzeugt, dessen Eintrag 36 die Textinformation des gerade bearbeiteten Datenelementes erhält. Falls hingegen im Hashcodierungsvektor 40 bereits ein gleicher Hashcodierungseintrag 41 vorgefunden wird, so wird ebenso ein zugeordneter Verweisvektor 50 vorgefunden, dessen Verweise 51 auf Textdeskriptorfelder 31 verweisen, welche überprüft werden, ob deren Einträge 36 mit der Textinformation des gerade bearbeiteten Datenelementes gleich ist, oder, falls kein derartiges Textdeskriptorfeld 31 vorgefunden wird, so wird ein weiteres Textdeskriptorfeld 31 erzeugt, dessen Eintrag 36 die Textinformation des gerade bearbeiteten Datenelementes erhält. In jenem Elementdeskriptorfeldvektor 10 oder 20, welcher jener Datenfolge zugeordnet ist, deren Datenelement gerade bearbeitet wird, wird in jenem Elementdeskriptorfeld 11 oder 21, welches dem gerade bearbeiteten Datenelement zugeordnet ist, der Verweis 15 oder 25 eingetragen auf jenes Textdeskriptorfeld 31, dessen Eintrag 36 gleich ist der Textinformation des gerade bearbeiteten Datenelementes. Sobald das Hashcodierungsverfahren 200 für die gefilterte Textinformation eines jeden Datenelementes der beiden zu vergleichenden Datenfolgen durchgeführt ist, und somit in jedem Elementdeskriptorfeld 11 oder 21 der Verweis 15 oder 25 eingetragen ist auf das jeweilige Textdeskriptorfeld 31, werden der Hashcodierungsvektor 40 und die Verweisvektoren 50 nicht mehr benötigt, und der dafür benötigte Speicherplatz kann freigegeben werden.

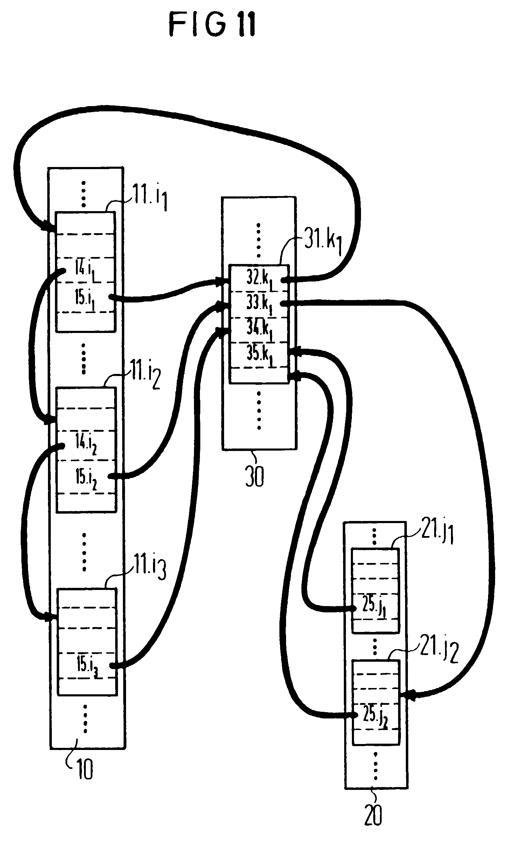

Wie die Figur 11 zeigt, werden beim ersten Zuweisungsverfahren 300 die Textdeskriptorfelder 31 gemäß ihrer Reihenfolge innerhalb des Textdeskriptorfeldvektors 30 bearbeitet.

Für das Textdeskriptorfeld 31.k₁ wird geprüft, ob und wie viele Elementdeskriptorfelder 21 im Elementdeskriptorfeldvektor 20 vorgefunden werden, in welchen ein Verweis 25 auf das gerade bearbeitete Textdeskriptorfeld 31.k₁ enthalten ist. Diese Gesamtanzahl wird als Eintrag 35.k₁ in das Textdeskriptorfeld 31.k₁ eingetragen.

Für das Textdeskriptorfeld 31.k₁ wird ebenfalls geprüft, ob und wie viele Elementdeskriptorfelder 11 im Elementdeskriptorfeldvektor 10 vorgefunden werden, in welchen ein Verweis 15 auf das gerade bearbeitete Textdeskriptorfeld 31.k₁ enthalten ist. Diese Gesamtanzahl wird als Eintrag 34.k₁ in das Textdeskriptorfeld 31.k₁ eingetragen. Für das als erstes innerhalb des Elementdeskriptorfeldvektors 20 vorgefundene derartige Elementdeskriptorfeld 21.i₁ wird der Verweis 32.k₁ auf dieses Elementdeskriptorfeld 11.i₁ in das Textdeskriptorfeld 31.k₁ eingetragen. Für das als letztes innerhalb des Elementdeskriptorfeldvektors 20 vorgefundene derartige Elementdeskriptorfeld 21.i₃ wird der Verweis 33.k₁ auf dieses Elementdeskriptorfeld 21.i₃ in das Textdeskriptorfeld 31.k₁ eingetragen. In den Elementdeskriptorfeldern 11.i₁, 11.i₂ wird jeweils der Verweis 14.i₁, 14.i₂ auf das als jeweils nächstfolgend vorgefundene derartige Elementdeskriptorfeld 11.i₂, 11.i₃ eingetragen. In jenem Elementdeskriptorfeld 11.i₃, für welches kein nächstfolgendes derartiges Elementdeskriptorfeld 11 vorgefunden wird, wird kein derartiger Verweis 14 eingetragen. Falls innerhalb des ersten Elementdeskriptorfeldvektors 10 kein derartiges Elementdeskriptorfeld 11 vorgefunden wird, welches den Verweis 15 auf das gerade bearbeitete Textdeskriptorfeld 31.k₁ aufweist, wird kein derartiger Verweis 32.k₁ in das Textdeskriptorfeld 31.k₁ eingetragen. Ebenso, falls innerhalb des zweiten Elementdeskriptorfeldvektors 20 kein derartiges Elementdeskriptorfeld 21 vorgefunden wird, welches den Verweis 25 auf das gerade bearbeitete Textdeskriptorfeld 31.k₁ aufweist, wird kein derartiger Verweis 33.k₁ in das Textdeskriptorfeld 31.k₁ eingetragen.

Für bestimmte Anwendungsfälle ist eine Protokollierung einer Gesamtanzahl von zuweisbaren Datenelementen der beiden Datenfolgen erwünscht. Diese kann jetzt durch eine Summenbildung errechnet werden. Für jedes Textdeskriptorfeld 31 ist der jeweils kleinere Eintrag 34 oder 35 auszuwählen und bei der Summenbildung aufzusummieren. Diese Summe ergibt dann die Gesamtanzahl von zuweisbaren Datenelementen der beiden Datenfolgen. Diese Gesamtanzahl kann in einem Zuweisungszählerfeld während des Aufbereitungsverfahrens abgespeichert werden. Bei jeder einzelnen Zuweisung kann dann dieses Zuweisungszählerfeld dekrementiert werden. Sobald dieses Zuweisungszählerfeld auf Null heruntergezählt ist, kann demnach keine weitere Zuweisung mehr erfolgen, und ein laufendes Zuweisungsverfahren kann abgebrochen werden. Ebenso kann vor einer Durchführung eines Zuweisungsverfahrens, also bereits beim Aufbereitungsverfahren überprüft werden, ob die Gesamtanzahl von zuweisbaren Datenelementen gleich Null ist, oder ob ein Zählerstand des Zuweisungszählerfeldes gleich Null ist, sodaß weitere Zuweisungsverfahren nicht mehr durchgeführt werden.

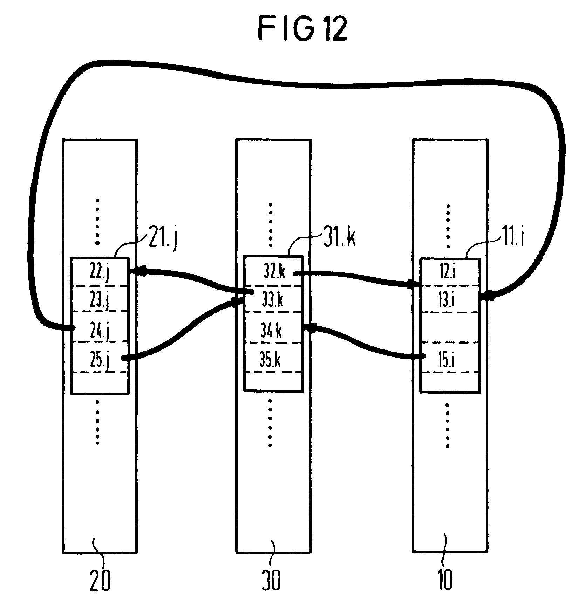

Wie die Figur 12 zeigt, werden beim ersten Zuweisungsverfahren 300 die Elementdeskriptorfelder 21 gemäß ihrer Reihenfolge innerhalb des Elementdeskriptorfeldvektors 20 bearbeitet.

Für jedes Elementdeskriptorfeld 21 wird geprüft, ob der Verweis 25 auf ein Textdeskriptorfeld 31 verweist, welches einen Verweis 32 auf ein Elementdeskriptorfeld 11 aufweist. Ist dies nicht der Fall, so wird als Statuseintrag 22 im Elementdeskriptorfeld 21 vermerkt, daß dieses Elementdeskriptorfeld 21 nicht zuweisbar ist. Anderenfalls wird als Statuseintrag 22 vermerkt, daß dieses Elementdeskriptorfeld 21 zuweisbar ist, und es werden anhand der Verweise 32 und 33 jene Elementdeskriptorfelder 11 aufgefunden, deren Verweis 15 ebenfalls auf das Textdeskriptorfeld 31 verweisen, und für welche ebenfalls als Statuseintrag 12 vermerkt wird, daß diese Elementdeskriptorfelder 11 zuweisbar sind, wobei diese Elementdeskriptorfelder 11 anhand der fallweise vorgefundenen Verweise 14 beschleunigt auffindbar sind. Für alle derart vorgefundenen zuweisbaren Elementdeskriptorfelder 21 und 11 wird zunächst im Markierungseintrag 23 und 13 vermerkt, daß eine Zuweisung noch nicht erfolgt ist.

Falls dabei ein Elementdeskriptorfeld 21.j vorgefunden wird, dessen Verweis 25.j auf ein Textdeskriptorfeld 31.k verweist, in welchem sowohl der Eintrag 34.k als auch der Eintrag 35.k gleich Eins ist, so werden die Elementdeskriptorfelder 21.j und ll.i einander zugewiesen. Es wird im Elementdeskriptorfeld 21.j der Verweis 24.j auf das Elementdeskriptorfeld ll.i eingetragen. Im Markierungseintrag 23.j und 13.i wird vermerkt, daß für diese Elementdeskriptorfelder 21.j und ll.i eine Zuweisung bereits erfolgt ist, sodaß dadurch der Status definiert ist.

Sowie alle Elementdeskriptorfelder 21 des Elementdeskriptorfeldvektors 20 auf diese Weise überprüft und bearbeitet sind, sind die Elementdeskriptorfelder 11 und 21 von allen jenen diesen zugeordneten Datenelementen einander zugewiesen, welche jeweils nur einmal sowohl in der ersten Datenfolge als auch in der zweiten Datenfolge enthalten sind.

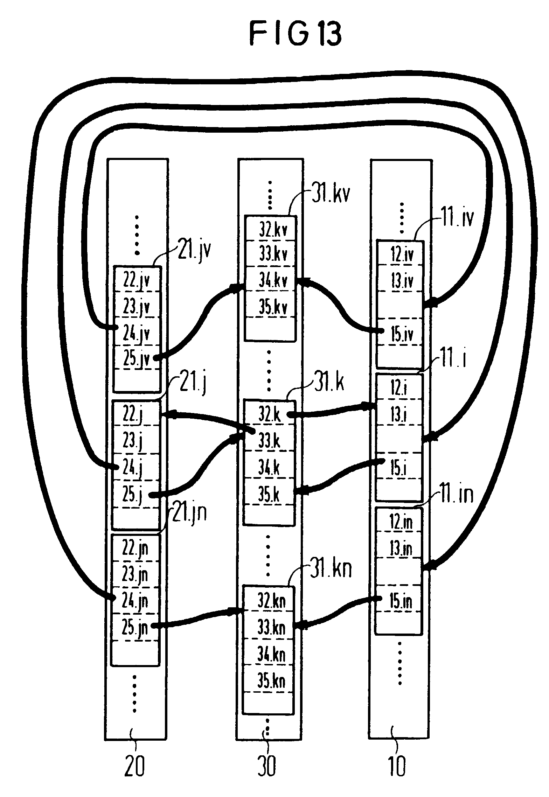

Wie die Figur 13 zeigt, werden beim ersten Zuweisungsverfahren 300 die Elementdeskriptorfelder 21 gemäß ihrer Reihenfolge innerhalb des Elementdeskriptorfeldvektors 20 bearbeitet.

Jedesmal wenn dabei ein Elementdeskriptorfeld 21.j vorgefunden wird, dessen Verweis 24.j auf ein Elementdeskriptorfeld ll.i verweist, wodurch diese Elementdeskriptorfelder 21.j und ll.i einander zugewiesen sind, so wird für die diesen beiden Elementdeskriptorfeldern 21.j und ll.i jeweils unmittelbar vorhergehenden Elementdeskriptorfelder 21.jv und 11.iv überprüft, ob jeweils ihre Verweise 25.jv und 15.iv auf dasselbe Textdeskriptorfeld 31.kv verweisen. Falls dies der Fall ist, so wird im Elementdeskriptorfeld 21.jv der Verweis 24.jv auf das Elementdeskriptorfeld 11.iv eingetragen, wodurch die Elementdeskriptorfelder 21.jv und 11.iv einander zugewiesen werden. In den Markierungseinträgen 23.jv und 13.iv wird jeweils vermerkt, daß die Elementdeskriptorfelder 21.jv und 11.iv bereits zugewiesen sind. Bezogen auf die Reihenfolge innerhalb des Elementdeskriptorfeldvektors 20 werden die Elementdeskriptorfelder 21 in einer absteigenden Sequenz nach weiteren derartigen jeweils unmittelbar vorhergehenden Elementdeskriptorfelder 21.jv geprüft und jeweils einem derartigen Elementdeskritorfeld 11.iv zugewiesen, bis ein unmittelbar vorhergehendes Elementdeskriptorfeld 21 vorgefunden wird, dessen Verweis 25 und der Verweis 15 des in der absteigenden Sequenz unmittelbar vorhergehenden Elementdeskriptorfeldes 11 auf unterschiedliche Textdeskriptorfelder 31 verweisen.

Danach wird, ausgehend vom vorgefundenen Elementdeskriptorfeld 21.j und dem diesem zugewiesenen Elementdeskriptorfeld 11.i, in einer aufsteigenden Sequenz nach weiteren derartigen jeweils unmittelbar nachfolgenden Elementdeskriptorfeldern 21.jn und 11.in gesucht, deren Verweise 25.jn und 15.in auf dasselbe Textdeskriptorfeld 31.kn verweisen. Derartige Elementdeskriptorfelder 21.jn und 11.in werden einander zugewiesen, indem jeweils der Verweis 24.jn eingetragen wird, welcher auf das jeweilige Elementdeskriptorfeld 11.in verweist. In den Markierungseinträgen 23.jn und 13.jn wird jeweils vermerkt, daß die Elementdeskriptorfelder 21.jn und 11.in bereits zugewiesen sind. Weitere derartige jeweils unmittelbar nachfolgende Elementdeskriptorfelder 21.jn werden bearbeitet, bis ein unmittelbar nachfolgendes Elementdeskriptorfeld 21 vorgefunden wird, dessen Verweis 25 und der Verweis 15 des in der aufsteigenden Sequenz nachfolgenden Elementdeskriptorfeldes 11 auf unterschiedliche Textdeskriptorfelder 31 verweisen.

In der Folge wird gemäß der Reihenfolge innerhalb des Elementdeskriptorfeldvektors 20 nach weiteren derartigen Elementdeskriptorfeldern 21 gesucht, deren Verweis 24 auf ein Elementdeskriptorfeld 11 verweist, wodurch diese Elementdeskriptorfelder 21 und 11 einander zugewiesen sind. Sowie ein weiteres derartiges Elementdeskriptorfeld vorgefunden ist, wird wie bereits erläutert, in einer absteigenden Sequenz einerseits und andererseits in einer aufsteigenden Sequenz, verfahren.

Nachdem das letzte Elementdeskriptorfeld 21 des Elementdeskriptorfeldvektors 20 auf diese Weise bearbeitet ist, werden die Elementdeskriptorfelder 21 gemäß ihrer Reihenfolge innerhalb des Elementdeskriptorfeldvektors 20 bearbeitet. Für jedes Elementdeskriptorfeld 21, welches einen Verweis 24 aufweist, durch welchen dieses einem Elementdeskriptorfeld 11 bereits zugewiesen ist, wird anhand des Verweises 25 das Textdeskriptorfeld 31 aufgefunden, in welchem der Eintrag 34 sowie der Eintrag 35 jeweils um Eins verringert wird. Falls das Zuweisungszählerfeld verwendet wird, wird dieses dekrementiert und hernach auf Null abgefragt. Falls das Zuweisungszählerfeld gleich Null ist, wird das Zuweisungsverfahren abgebrochen. Ebenso kann bei jeder einzelnen Zuweisung unmittelbar die Dekrementierung die Einträge 34 und 35 sowie des Zuweisungszählerfeldes vorgesehen sein mit einer Überprüfung des Zuweisungszählerfeldes, ob dieses gleich Null ist.

Das erste Zuweisungsverfahren 300 ist beendet.

Es folgt die erste Abfrage 900.1 auf eine bereits zugewiesene Maximalanzahl. Falls das Zuweisungszählerfeld verwendet wird, wird dieses abgefragt auf Null. Ansonsten werden die Textdeskriptorfelder 31 gemäß ihrer Reihenfolge innerhalb des Textdeskriptorfeldvektors 30 bearbeitet.
Von jedem Textdeskriptorfeld 31 werden die Einträge 34 und 35 überprüft. Jeweils der kleinere Eintrag 34 oder 35 wird übernommen, und alle diese jeweils kleineren Einträge 34 oder 35 werden aufsummiert. Falls die dadurch gebildete Summe für alle Textdeskriptorfelder 31 gleich Null ist, so können keine weiteren Textdeskriptorfelder 21 und 11 einander zugewiesen werden, und eine bereits zugewiesene Maximalanzahl ist erreicht.

Falls eine zugewiesene Maximalanzahl noch nicht erreicht ist, so folgt das zweite Zuweisungsverfahren 400.

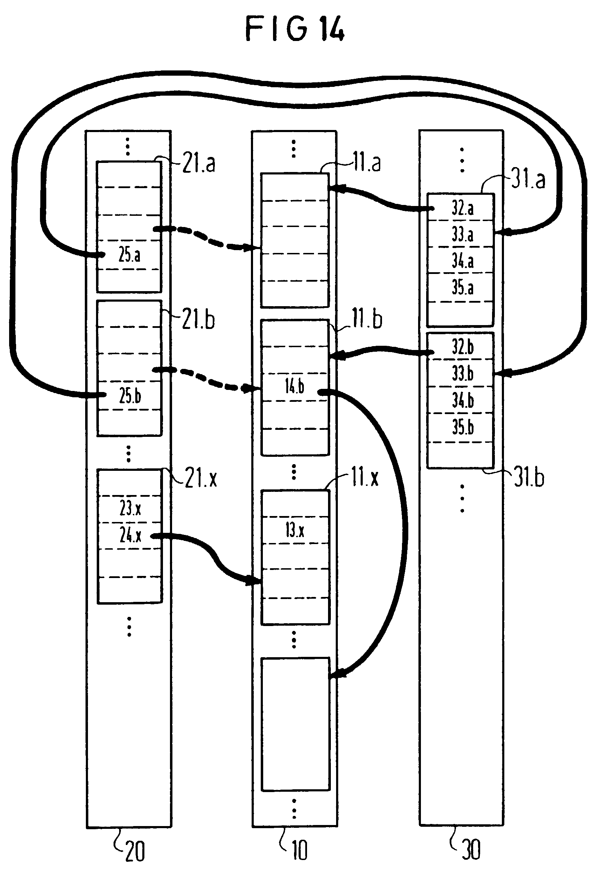

Wie die Figur 14 zeigt, werden beim zweiten Zuweisungsverfahren 400 der Textdeskriptorfeldvektor 30, sowie der erste und zweite Elementdeskriptorfeldvektor 10 und 20 verwendet. In diesem Elementdeskriptorfeldvektor 10 und 20 werden Zuweisungsbereiche festgelegt und innerhalb jedes einzelnen Zuweisungsbereiches wird iterativ nach weiteren möglichen Zuweisungen gesucht. Bei jedem Iterationsschritt soll ein jeweils größtmöglicher Zuweisungsblock von aufeinanderfolgenden Elementdeskriptorfeldern 21 und 11 aufgefunden werden und zugewiesen werden.

Zur Auffindung von Zuweisungsbereichen können mehrere, alternativ oder auch nacheinander einsetzbare Methoden angewendet werden. Es ist das zweite Zuweisungsverfahren so durchführbar, daß auswählbar nur nach einer bestimmten Methode die Zuweisungsbereiche aufbereitet werden, oder daß auswählbar ist, nach welcher Methode zuerst für einen ersten Durchlauf die Zuweisungsbereiche aufzubereiten sind, mit einer weiteren, anderen oder auch derselben Methode für einen weiteren Durchlauf die Zuweisungsbereiche aufzubereiten sind. Es kann vorgesehen sein, daß eine bestimmte Anzahl von Durchläufen mit je einer bestimmten Methode auswählbar ist. Als eine Methode zur Bestimmung von Zuweisungsbereichen kann nach Abschnittsmarkierungen in den Datenelementen der Datenfolgen gesucht werden. Bei weiteren Methoden können bereits zugewiesene Datenelemente als Bereichsgrenzen dienen, sodaß die dazwischenliegenden Bereiche der Datenfolgen mit ihren Zuweisungslücken als Zuweisungsbereiche verwendet werden. Zur Auffindung von Zuweisungsbereichen können beispielsweise die Markierungseinträge 13 und 23 geprüft werden. Jeweils als Zuweisungsbereich kann festgelegt werden im Elementdeskriptorfeldvektor 10 ein erster Zuweisungsabschnitt zwischen je zwei Elementdeskriptorfeldern 11, in deren Markierungseintrag 13 jeweils eine bereits erfolgte Zuweisung notiert ist, gemeinsam mit einem zugeordneten zweiten Zuweisungsabschnitt im Elementdeskriptorfeldvektor 20 zwischen je zwei Elementdeskriptorfeldern 21, in deren Markierungseintrag 22 jeweils eine bereits erfolgte Zuweisung notiert ist, unabhängig davon, welchen Elementdeskriptorfeldern diese als Grenze des jeweiligen Zuweisungsbereiches festgelegten Elementdeskriptorfelder im einzelnen bereits zugewiesen sind.

Bei diesem Ausführungsbeispiel sollen Zuweisungsbereiche nach einer abgewandelten Methode in der nachfolgend erläuterten Weise erhalten werden, welche insbesondere auch allgemein einsetzbar ist.

Zum Auffinden des ersten Zuweisungsbereiches wird der zweite Elementdeskriptorfeldvektor 20 zunächst beginnend mit dem ersten der Elementdeskriptorfelder 21 gemäß der Reihenfolge der Elementdeskriptorfelder 21 durchsucht, bis ein Elementdeskriptorfeld 21.x vorgefunden wird, welches den Verweis 24 aufweist auf ein Elementdeskriptorfeld 11.x, wodurch eine bereits erfolgte Zuweisung erkannt wird.

Innerhalb dieses Zuweisungsbereiches für die beiden Elementdeskriptorfeldvektoren 20 und 10, also beginnend beim ersten der Elementdeskriptorfelder 21 bis zum Elementdeskriptorfeld 21.x einerseits und andererseits beginnend beim ersten der Elementdeskriptorfelder 11 bis zum Elementdeskriptorfeld 11.x, wird iterativ nach weiteren möglichen Zuweisungen gesucht.

Bei der Suche nach weiteren möglichen derartigen Zuweisungen werden bei jedem Iterationsschritt die Elementdeskriptorfelder 21 gemäß ihrer Reihenfolge im Elementdeskriptorfeldvektor 20 untersucht. Bei jedem Elementdeskriptorfeld 21.a wird geprüft, ob im Textdeskriptorfeld 31.a, welches anhand des Verweises 25.a aufgefunden wird, ein Eintrag 34 größer als Null vorgefunden wird. Falls dies der Fall ist, sind durch die Verweise 32.a und 33.a jeweils zuweisbare Elementdeskriptorfelder 11.a auffindbar, welche anhand der Verweise 14.a erleichtert auffindbar sind. In diesem Elementdeskriptorfeld 11.a wird jeweils mittels der Markierungseinträge 13.a erkannt, ob jedes einzelne der Elementdeskriptorfelder 11.a bereits zugewiesen ist, oder ob dieses noch zugewiesen werden kann. Ein jeweils auf diese Art vorgefundenes zuweisbares Elementdeskriptorfeld 11.a, welches innerhalb des Zuweisungsabschnittes aufgefunden wird, ist demnach jederzeit dem gerade bearbeiteten Elementdeskriptorfeld 21.a gegebenenfalls zuweisbar, in dem im Elementdeskriptorfeld 21.a der Verweis 24.a eingetragen werden soll, welcher dann auf das Elementdeskriptorfeld 11.a verweisen soll. Ebenso soll in den Markierungseinträgen 23.a und 13.a eine durchgeführte Zuweisung vermerkt werden. Zusätzlich sollen im Textdeskriptorfeld 31.a die Einträge 34.a und 35.a jeweils um Eins verringert werden gemäß der in den beiden Datenfolgen jeweils verringerten Anzahl von zuweisbaren Datenelementen. Falls das Zuweisungszählerfeld verwendet wird, soll dieses dekrementiert werden.

Zunächst erfolgt jedoch noch keine Zuweisung für dieses soeben aufgefundene zuweisbare Elementdeskriptorfeld 21.a, sondern es wird vielmehr lediglich vorgemerkt, daß ein Zuweisungsblock vorläufig vorgefunden ist, welcher beim Elementdeskriptorfeld 21.a beginnt und derzeit eine Länge gleich Eins aufweist. Anschließend wird das auf das Elementdeskriptorfeld 21.a nächstfolgende Elementdeskriptorfeld 21.b untersucht, ob es überhaupt zuweisbar ist, einem Elementdeskriptorfeld 11.b einerseits, und andererseits, ob es ein zuweisbares Elementdeskriptorfeld 11.b gibt, welches zum Elementdeskriptorfeld 11.a das nächstfolgende ist, und welches dadurch eine Verlängerung des vorläufig vorgefundenen Zuweisungsblockes ermöglicht. Bei dem in der Figur 14 dargestellten Fallbeispiel bilden die jeweils aufeinanderfolgenden Elementdeskriptorfelder 21.a und 21.b einerseits sowie 11.a und 11.b einen vorgefundenen Zuweisungsblock einer Länge gleich 2. Demzufolge wird zusätzlich vorgemerkt, daß vorläufig ein größtmöglicher Zuweisungsblock vorgefunden ist, welcher beim Elementdeskriptorfeld 21.a beginnt und derzeit eine Länge gleich 2 aufweist. Für jeden vorläufig vorgefundenen Zuweisungsblock wird geprüft, ob er länger ist, als der vorläufig vorgefundene größtmögliche Zuweisungsblock, und ggf. wird der längere vorgefundene Zuweisungsblock als neuer größtmöglicher Zuweisungsblock vorgemerkt.

Falls hingegen für ein Elementdeskriptorfeld 21 kein zuweisbares Elementdeskriptorfeld 11 innerhalb des Zuweisungsbereiches vorgefunden wird, oder falls im Textdeskriptorfeld 31 keine Einträge 32 und 33 enthalten sind, so wird dieses soeben untersuchte Elenentdeskriptorfeld 21 nicht weiter untersucht und das auf das soeben untersuchte Elementdeskriptorfeld 21 nächstfolgende Elementdeskriptorfeld 21 wird, wie erläutert, untersucht und bearbeitet bis das Elementdeskriptorfeld 21.x erreicht ist. Die Elementdeskriptorfelder des zu diesem Zeitpunkt vorgemerkten größtmöglichen Zuweisungsblockes werden auf die erläuterte Weise innerhalb des Zuweisungsbereiches einander zugewiesen. Die dabei zugewiesene Menge an zugewiesenen Elementdeskriptorfeldern 21 und 11 wird als "erster" größtmöglicher Zuweisungsblock bezeichnet, insbesondere weil jeweils der erste innerhalb des Zuweisungsbereiches vorgefundene größtmögliche zuweisbare Zuweisungsblock von Elementdeskriptorfeldern 21 und 11 zugewiesen wird.

Der erste Iterationsschritt für diesen Zuweisungsbereich ist damit beendet. Falls dabei kein zuweisbarer Zuweisungsblock vorgemerkt werden konnte, was beispielsweise an einer Länge gleich Null für den Zuweisungsblock erkennbar ist, wird das Zuweisungsverfahren fortgesetzt mit Iterationsschritten für den nächsten Zuweisungsbereich. Anderenfalls wird in demselben soeben durchsuchten Zuweisungsbereich ein weiterer Iterationsschritt durchgeführt zum Auffinden eines weiteren größtmöglichen zuweisbaren Zuweisungsblockes.

Diese Vorgehensweise hat sich insbesondere beim Vergleich zweier Programmversionen als günstig erwiesen, so daß bei Umstellungen und Änderungen markiert wird, welche Art von Zusammenstellung und Anordnung der Datenelemente anhand des Vergleichs vorgefunden wird. Wie bereits erkennbar, ist dieses Zuweisungsverfahren symmetrisch gegenüber einer Vertauschung von erster und zweiter Datenfolge.

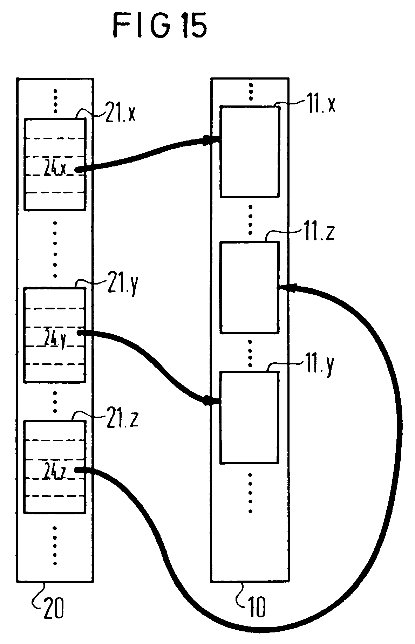

Sobald kein Zuweisungsblock mehr zugewiesen werden kann, wird, wie die Figur 15 zeigt, nach der erläuterten Bearbeitung des Zuweisungsbereiches bis zum Elementdeskriptorfeld 21.x innerhalb des Elementdeskriptorfeldvektors 20 und des diesem zugewiesenen Elementdeskriptorfeld 11.x des Elementdeskriptorfeldvektors 10 diese bereits erläuterte Bearbeitung des zweiten Zuweisungsverfahrens 400 fortgesetzt für den nächstfolgenden Zuweisungsbereich, welcher dadurch erhalten wird, daß ausgehend vom Elementdeskriptorfeld 21.x innerhalb des zweiten Deskriptorfeldvektors 20 die gemäß der Reihenfolge nächstfolgenden Elementdeskriptorfelder 21 untersucht werden. Zunächst wird das Ende eines Zuweisungsblockes gesucht, welcher beispielsweise wie in der Figur 13 dargestellt, vorliegen kann. Demzufolge wird das nächstfolgende nicht zugewiesene Elementdeskriptorfeld 21 aufgesucht, in welchem ein Verweis 24 nicht eingetragen ist. Nachdem der Beginn einer Zuweisungslücke aufgefunden ist, wird das Ende dieser Zuweisungslücke aufgesucht zur Begrenzung des nächstfolgenden Zuweisungsbereiches. Es werden innerhalb des zweiten Deskriptorfeldvektors 20 die gemäß der Reihenfolge nächstfolgenden Elementdeskriptorfelder 21 untersucht, bis ein Elementdeskriptorfeld 21.y vorgefunden wird, dessen Verweis 24.y auf ein diesem zugewiesenes Elementdeskriptorfeld 11.y verweist. Dieser nächstfolgende zu bearbeitende Zuweisungsbereich beginnt bei dem in der Figur 15 dargestellten Fallbeispiel somit bei den Elementdeskriptorfeldern 21.x und 11.x und endet bei den Elementdeskriptorfeldern 21.y und ll.Z. Es werden die Elementdeskriptorfelder 21, wie bereits erläutert, innerhalb dieses Zuweisungsabschnittes untersucht und bearbeitet. Es erfolgt jeweils eine iterative Zuweisung von zuweisbaren Elementdeskriptorfeldern 21 und 11 eines ersten größtmöglichen vorgefundenen Zuweisungsblockes. Auf diese Weise werden innerhalb dieses weiteren Zuweisungsabschnittes weitere Datenelemente zugewiesen.

Danach wird erneut nach einem weiteren Zuweisungsbereich der Elementdeskriptorfeldvektor 20 untersucht. Beginnend beim Elementdeskriptorfeld 21.y, an welchem der zuvor untersuchte Zuweisungsbereich endet, werden die gemäß der Reihenfolge nächstfolgenden Elementdeskriptorfelder 21 untersucht, bis eine Zuweisungslücke aufgefunden ist, und hernach bis ein Elementdeskriptorfeld 21.z vorgefunden wird, dessen Verweis 24.z auf ein Elementdeskriptorfeld 11.z verweist. Dieser nächstfolgende zu bearbeitende Zuweisungsbereich beginnt bei dem in der Figur 15 dargestellten Fallbeispiel, da das Elementdeskriptorfeld 11.z gemäß der Reihenfolge innerhalb des Elementdeskriptorfeldvektors 10 vor dem Elementdeskriptorfeld 11.y vorgefunden wird, somit bei den Elementdeskriptorfeldern 21.y und 11.y und endet bei den Elementdeskriptorfeldern 21.z und dem Ende des ersten Elementdeskriptorfeldvektors. Es werden, wie zuvor erläutert, die Elementdeskriptorfelder 21 innerhalb dieses Zuweisungsbereiches iterativ untersucht und bearbeitet. Es erfolgt jeweils eine Zuweisung von zuweisbaren Elementdeskriptorfeldern 21 und 11 eines ersten vorgefundenen größtmöglichen Zuweisungsblockes.

Auf diese Weise werden innerhalb dieses weiteren Zuweisungsabschnittes weitere Datenelemente zugewiesen.

Danach wird erneut nach einem weiteren Zuweisungsbereich der Elemendeskriptorfelavektor 20 untersucht. Beginnend beim Elementdeskriptorfeld 21.z, an welchem der zuvor untersuchte Zuweisungsbereich endet, wird der Elementdeskriptorfeldvektor 20 gemäß der Reihenfolge nach weiteren Elementdeskriptorfeldern 21 durchsucht, welche den Verweis 24 aufweisen und dadurch einem Elementdeskriptorfeld 11 bereits zugewiesen sind. Bei dem in der Figur 15 dargestellten Fallbeispiel wird bis zum Ende des Elementdeskriptorfeldvektors 20 kein weiteres derartiges Elementdeskriptorfeld 21 vorgefunden. Der Zuweisungsbereich, welcher als nächster zu bearbeiten ist, beginnt demnach bei den Elementdeskriptorfeldern 21.z und 11.z und endet beim jeweils letzten vorgefundenen Elementdeskriptorfeld 21 und 11.y. Dieser Zuweisungsbereich wird ebenso, wie zuvor erläutert, nach zuweisbaren Elementdeskriptorfeldern 21 und 11 iterativ durchsucht und bearbeitet. Es erfolgt jeweils eine Zuweisung von zuweisbaren Elementdeskriptorfeldern 21 und 11 eines ersten vorgefundenen größtmöglichen Zuweisungsblockes. Auf diese Weise werden mittels dieser Methode innerhalb dieses letzten Zuweisungsbereiches weitere Datenelemente zugewiesen.

Es wird anhand von Figur 15 daraufhingewiesen, daß bei jener Methode der Assoziierung von Zuweisungslücken, für das in Figur 15 dargestellte Fallbeispiel, der erste Zuweisungsbereich vom Datenelement 11.1 bis zum Datenelement 11.X und vom Datenelement 21.1 bis zum Datenelement 21.X reicht. Der zweite Zuweisungsbereich reicht vom Datenelement 11.X bis zum Datenelement ll.Z und vom Datenelement 21.X bis zum Datenelement 21.Y. Der dritte Zuweisungsbereich reicht vom Datenelement 11.Y bis zum Ende des Elementdeskriptorfeldvektors 10 und vom Datenelement 21.Y bis zum Datenelement 21.Z. Der vierte und letzte Zuweisungsbereich reicht vom Datenelement ll.Z bis zum Datenelement 11.Y und vom Datenelement 21.Z bis zum letzten Datenelement 21. Derartige benachbarte Zuweisungsbereiche können auch gruppenweise, beispielsweise paarweise, zusammengefaßt sein zu jeweils einen zusammengefaßten Zuweisungsbereich. Falls demzufolge jene Methode der Assoziierung der Zuweisungslücken ausgewählt oder vorgesehen ist, wird in der zuvor erläuterten Weise in den derartigen Zuweisungsbereichen nach Zuweisungsblöcken iterativ gesucht.

Das zweite Zuweisungsverfahren 400 ist beendet.

Es folgt die zweite Abfrage 900.2 auf eine bereits zugewiesene Maximalanzahl. Falls das Zuweisungszählerfeld verwendet wird, wird dieses abgefragt auf Null. Ansonsten werden die Textdeskriptorfelder 31 gemäß ihrer Reihenfolge innerhalb des Textdeskriptorfefldvektors 30 bearbeitet. Von jedem Textdeskriptorfeld 31 werden die Einträge 34 und 35 überprüft. Jeweils der kleinere Eintrag 34 oder 35 wird übernommen, und alle diese jeweils kleineren Einträge 34 oder 35 werden aufsummiert. Falls die dadurch gebildete Summe für alle Textdeskriptorfelder 31 gleich Null ist, so können keine weiteren Elementdeskriptorfelder 21 und 11 einander zugewiesen werden, und eine bereits zugewiesene Maximalanzahl ist erreicht.

Falls eine zugewiesene Maximalanzahl noch nicht erreicht ist, so folgt das dritte Zuweisungsverfahren 500.

Beim dritten Zuweisungsverfahren 500 werden, wie beim zweiten Zuweisungsverfahren bereits erläutert, weitere Datenelemente von Zuweisungsblöcken iterativ zugewiesen. Für den Zuweisungsbereich ist in diesem Fall keine Begrenzung in den Elementdeskriptorfeldvektoren 20 und 10 vorgesehen. Genauso wie beim Zuweisungsverfahren 400 werden bei der Suche nach weiteren möglichen Zuweisungen alle Elementdeskriptorfelder 21 gemäß ihrer Reihenfolge im Elementdeskriptorfeldvektor 20 iterativ untersucht nach jeweils einem größtmöglichen Zuweisungsblock.

Bei jedem Iterationsschritt wird wie beim Zuweisungsverfahren 400 jedes Elementdeskriptorfeld 21 geprüft, wie auch insbesondere anhand von Fig. 14 erkennbar ist, ob im Textdeskriptorfeld 31, welches anhand des Verweises 25 aufgefunden wird, ein Eintrag 34 größer als Null vorgefunden wird. Falls dies der Fall ist, sind durch die Verweise 32 und 33 jeweils zuweisbare Elementdeskriptorfelder 11 auffindbar sind, welche auch anhand der Verweise 14 erleichtert auffindbar sind. In diesen Elementdeskriptorfeldern 11 wird jeweils mittels der Markierungseinträge 13 erkannt, ob jedes einzelne der Elementdeskriptorfelder 11 bereits zugewiesen ist, oder ob dieses noch zugewiesen werden kann. Das jeweils erste auf diese Art vorgefundene zuweisbare Elementdeskriptorfeld 11, welches innerhalb des gesamten Elementdeskriptorfeldvektors 10 gesucht wird, ist demnach jederzeit dem gerade bearbeiteten Elementdeskriptorfeld 21 gegebenenfalls zuweisbar. Dabei soll im Elementdeskriptorfeld 21 der Verweis 24 eingetragen werden, welcher auf das zuweisbare Elementdeskriptorfeld 11 verweist. Ebenso soll in den Markierungseinträgen 23 und 13 die Zuweisung vermerkt werden. Zusätzlich sollen im Textdeskriptorfeld 31 die Einträge 34 und 35 jeweils um Eins verringert werden gemäß der in den beiden Datenfolgen jeweils verringerten Anzahl von zuweisbaren Datenelementen. Falls das Zuweisungszählerfeld verwendet wird, soll dieses dekrementiert werden. Zunächst erfolgt jedoch noch keine Zuweisung. Vielmehr sind, wie bereits beim zweiten Zuweisungsverfahren erläutert, zuweisbare Zuweisungsblöcke bestehend aus in beiden Datenfolgen aufeinanderfolgenden Elementdeskriptorfeldern aufzufinden. Ein erster vorgefundener Zuweisungsblock von einer Länge gleich Eins wird zunächst als der vorerst größtmögliche vorgefundene Zuweisungsblock vorgemerkt, beispielsweise durch sein Elementdeskriptorfeld 21 des Anfangs des Zuweisungsblockes und durch seine Länge. Mit dieser Länge wird die Länge jedes weiteren vorgefundenen Zuweisungsblockes verglichen. Sobald ein längerer Zuweisungsblock vorgefunden wird, wird dieser als der größtmögliche vorgefundene zuweisbare Zuweisungsblock vorgemerkt. Falls hingegen im untersuchten Elementdeskriptorfeld 21 bereits der Verweis 24 eingetragen ist, wodurch erkannt wird, daß dieses Elementdeskriptorfeld 21 bereits einem Elementdeskriptorfeld 11 zugewiesen ist, oder falls im Textdeskriptorfeld 31, welches anhand des Verweises 25 aufgefunden wird, keine Einträge 31 und 32 enthalten sind, oder falls ein Eintrag 34 gleich Null vorgefunden wird, oder falls kein zuweisbares Elementdeskriptorfeld 11 vorgefunden wird, so wird dieses soeben untersuchte Elementdeskriptorfeld 21 nicht weiter untersucht und das auf das soeben untersuchte Elementdeskriptorfeld 21 nächstfolgende Elementdeskriptorfeld 21 wird, wie erläutert, untersucht und bearbeitet, usw., bis das letzte Elementdeskriptorfeld 21 innerhalb des Elementdeskriptorfeldvektors 20 bearbeitet ist.

Für eine Beendigung eines Iterationsschrittes des dritten Zuweisungsverfahrens wird der jeweilige größtmögliche vorgefundene Zuweisungsblock zugewiesen, indem dessen Elementdeskriptorfelder 21 und 11 einander zugewiesen werden. Danach folgt ein weiterer Iterationsschritt. Sobald kein zuweisbarer Zuweisungsblock mehr vorgefunden wird, wird die Iteration beendet.

Auf die erläuterte Weise werden iterativ weitere Datenelemente zugewiesen, so daß nach dem letzten Iterationsschritt jedes zuweisbare Datenelement zugewiesen ist, und eine zugewiesene Maximalanzahl jetzt erreicht ist.

Es folgt das Protokollierungsverfahren 600.

Falls blockweise umgestellte Teile protokolliert werden sollen, und somit für die ersten Elementdeskriptorfelder 11 jeweils der Eintrag 17 von einer Protokollierungsnummer für blockweise umgestellte Teile von beiden Datenfolgen vorgesehen ist, sowie für die zweiten Elementdeskriptorfelder 21 jeweils der Eintrag 27 von der Protokollierungsnummer für die blockweise umgestellten Teile von den beiden Datenfolgen vorgesehen ist, so werden zu Beginn des Protokollierungsverfahrens 600 diese Protekollierungsnummern ermittelt und eingetragen. Es wird der zweite Elementdeskriptorfeldvektor 20 durchsucht. Die Protokollierungsnummer ist anfangs gleich Eins. Diese soll zusammengehörige blockweise umgestellte Teile markieren.

Gemäß ihrer Reihenfolge werden die Elementdeskriptorfelder 21 durchsucht, bis ein zugewiesenes Elementdeskriptorfeld 21 jeweils gefunden ist. Für jedes derartige Elementdeskriptorfeld 21, dessen zugewiesener Status insbesondere am Statuseintrag 22 erkennbar ist, wird mittels des Verweises 24 das zugewiesene erste Elementdeskriptorfeld 11 ermittelt, wie dies beispielsweise anhand von Figur 15 bereits erläutert ist. Diese Elementdeskriptorfelder 21 und 11 werden temporär notiert. Ausgehend von diesem temporär notierten Elementdeskriptorfeld 11 werden in Richtung Dateianfang die davorliegenden Elementdeskriptorfelder 11 durchsucht bis ein zugewiesenes Elementdeskriptorfeld 11 aufgefunden ist. Von diesem wird der Eintrag 17 überprüft.

Falls dieser gleich ist der aktuellen Protekollierungsnummer oder auch bei einem Erreichen des Dateianfangs vom Elementdeskriptorfeldvektor 10, so wird für alle bis zum temporär notierten Elementdeskriptorfeld 11 dazwischenliegenden und somit nicht zugewiesenen Elementdeskriptorfelder 11 als Eintrag 17 die gerade Protekollierungsnummer eingetragen. Diese wird ebenso eingetragen als der Eintrag 17 in die temporär notierten Elementdeskriptorfelder 11 und 21. Ausgehend von diesem temporär notierten Elementdeskriptorfeld 21 werden die in Richtung Dateianfang davorliegenden Elementdeskriptorfelder 21 bearbeitet, indem als Eintrag 17 die aktuelle Protekollierungsnummer eingetragen wird, bis hin zu jenem dabei vorgefundenen Elementdeskriptorfeld 21, in welchem bereits der Eintrag 17 erfolgt ist.

Wird hingegen ausgehend vom temporär notierten Elementdeskriptorfeld 11, wie zuvor erläutert, ein davor liegendes Elementdeskriptorfeld 11 vorgefunden, dessen Eintrag 17 mit der aktuellen Protokollierungsnummer nicht übereinstimmt, so liegt eine Umstellung bei den beiden Datenfolgen vor. In diesem Fall wird die Protokollierungsnummer um Eins erhöht. Diese erhöhte Protokollierungsnummer wird in die beiden temporär notierten Elementdeskriptorfelder 11 und 21 als Eintrag 17 eingetragen, und gilt nachfolgend als aktuelle Protokollierungsnummer.

Ausgehend vom temporär notierten Elementdeskriptorfeld 21 werden gemäß ihrer Reihenfolge die Elementdeskriptorfelder 21 weiter durchsucht, bis ein weiteres zugewiesenes Elementdeskriptorfeld 21 vorgefunden wird.

Falls dabei das Dateiende im Elementdeskriptorfeldvektor 20 vorgefunden wird, so wird ausgehend vom Dateiende in Richtung Dateianfang in alle davorliegenden Elementdeskriptorfelder 21 als Eintrag 17 die aktuelle Protokollierungsnummer eingetragen, sofern noch kein Eintrag 17 eingetragen ist, bis zu jenem dabei vorgefundenen Elementdeskriptorfeld 21, in welchem bereits der Eintrag 17 erfolgt ist oder bis der Dateianfang erreicht ist. Zusätzlich wird im Elementdeskrptorfeldvektor 10 ausgehend vom Dateiende in Richtung Dateianfang nach einem Elementdeskriptorfeld 11 gesucht, welches den Eintrag 17 aufweist. Dieser vorgefundene Eintrag 17 wird ausgelesen und in Richtung Dateiende in alle nachfolgenden Elementdeskriptorfelder 11 eingetragen. Falls kein Elementdeskriptorfeld 11 mit einem Eintrag 17 vorgefunden wird, so wird in alle Elementdeskriptorfelder 11 die aktuelle Protokollierungsnummer als Eintrag 17 eingetragen.

Bei dem in Figur 15 dargestellten Fallbeispiel erhalten demzufolge die Elementdeskriptorfelder 21 vom ersten an bis inklusive zum Elementdeskriptorfeld 21.X als Eintrag 17 eine Protokollierungsnummer gleich Eins. Das Elementdeskriptorfeld 21.Y erhält als Eintrag 17 eine Protokollierungsnummer gleich Zwei. Das Elementdeskriptorfeld 21.Z und alle nachfolgenden bis zum letzten erhalten als Eintrag 17 eine Protokollierungsnummer gleich Drei. Die Elementdeskriptorfelder 11 vom ersten an bis inklusive zum Elementdeskriptorfeld 11.X erhalten als Eintag 17 eine Protokollierungsnummer gleich Eins. Das Elementdeskriptorfeld 11.Z erhält als Eintrag 17 eine Protokollierungsnummer gleich Drei. Das Elementdeskriptorfeld 11.Y und alle nachfolgenden bis zum letzten erhalten als Eintrag 17 eine Protokollierungsnummer gleich Zwei.

Es erfolgt die Protokollierung der Zuweisungen für beide Datenfolgen.

Es werden bei diesem Ausführungsbeispiel die Elementdeskriptorfelder 21 gemäß ihrer Reihenfolge innerhalb des Elementdeskriptorfeldvektors 20 bearbeitet.

Zu jedem Elementdeskriptorfeld 21, welches einem Datenelement der zweiten Datenfolge zugeordnet ist, wird der Statuseintrag protokolliert, in welchem vermerkt ist, ob dieses Datenelement zuweisbar ist oder nicht, und damit also, ob dieses Datenelement in beiden Datenfolgen enthalten ist.

Ebenso wird der Markierungseintrag 23 protokolliert, in welchem vermerkt ist, ob dieses Datenelement der zweiten Datenfolge zugewiesen ist oder nicht.

Weiters wird der Verweis 24 protokolliert, in welchem vermerkt ist, welchem Elementdeskriptorfeld 11, und damit welchem Datenelement der ersten Datenfolge, dieses Datenelement der zweiten Datenfolge zugewiesen ist.

Weiters wird der Eintrag 36 des Textdeskriptorfeldes 31 protokolliert, welcher anhand des Verweises 25 aufgefunden wird und in welchem die Textinformation enthalten ist, mit welcher der Vergleich durchgeführt ist.

Falls die Durchführung des Filterverfahrens 100 ausgewählt ist, wird das Volltextfeld 81 protokolliert, welches anhand des Verweises 26 aufgefunden wird, und in welchem die Volltextinformation enthalten ist.

Falls die Blockzuweisung 610 ausgewählt ist, wird der Eintrag 27 protokolliert.

Danach werden die Elementdeskriptorfelder 11 gemäß ihrer Reihenfolge innerhalb des Elementdeskriptorfeldvektors 10 bearbeitet.

Zu jedem Elementdeskriptorfeld 11, welches einem Datenelement der ersten Datenfolge zugeordnet ist, wird der Statuseintrag 12 protokolliert, in welchem vermerkt ist, ob dieses Datenelement zuweisbar ist oder nicht, und damit also, ob dieses Datenelement in beiden Datenfolgen enthalten ist. Ebenso wird der Markierungseintrag 13 protokolliert, in welchem vermerkt ist, ob dieses Datenelement zugewiesen ist oder nicht.

Weiters wird der Verweis 14 protokolliert, in welchem vermerkt ist, ob und welches nächstfolgende gleiche Datenelement vermerkt ist.

Weiters wird der Eintrag 36 des Textdeskriptorfeldes 31 protokolliert, welcher anhand des Verweises 15 aufgefunden wird, und in welchem die Textinformation enthalten ist, mit welcher der Vergleich durchgeführt ist.

Falls die Durchführung des Filterverfahrens 100 ausgewählt ist, wird das Volltextfeld 81 protokolliert, welches anhand des Verweises 16 aufgefunden wird, und in welchem die Volltextinformation enthalten ist.

Falls die Blockzuweisung 610 ausgewählt ist, wird die Eintrag 17 protokolliert.

Damit ist das Protokollierungsverfahren 600 dieses Ausführungsbeispiels beendet.

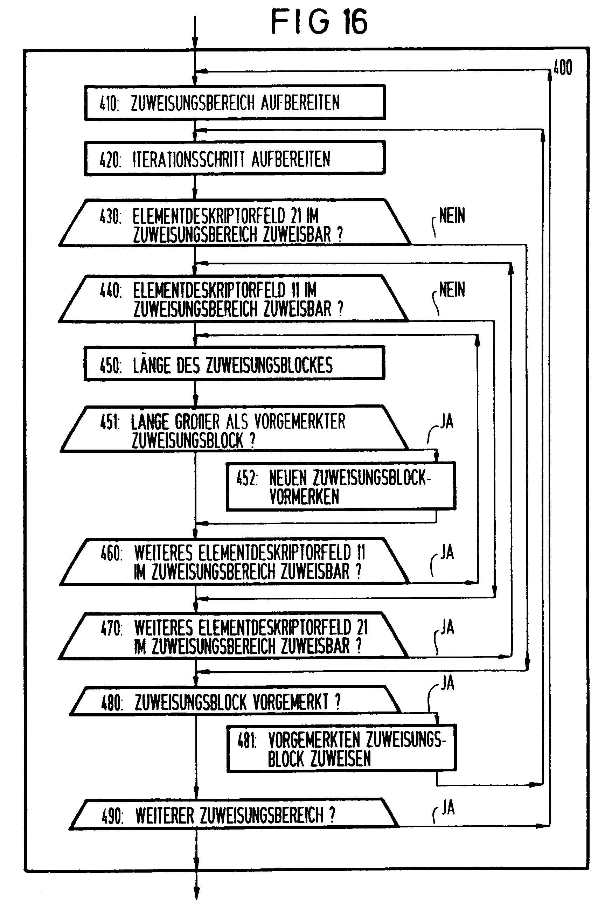

Es wird anhand von Figur 16 das zweite Zuweisungsverfahren 400 näher erläutert.

Wie die Figur 16 zeigt, besteht ein Ablaufübersichtsflußdiagramm bei der Durchführung des zweiten Zuweisungsverfahrens 400 aus mehreren Verfahrensschritten 410, 420, ... 490.

Am Beginn des zweiten Zuweisungsverfahrens 400 wird der Verfahrensschritt 410 ausgeführt. Es wird ein Zuweisungsbereich nach einer bestimmten Methode aufbereitet. Im Elementdeskriptorfeldvektor 20 wird ein Zuweisungsabschnitt festgelegt, dessen Begrenzung durch Elementdeskriptorfelder 21 vorgegeben wird. Im Elementdeskriptorfeldvektor 10 wird ein zugeordneter Zuweisungsabschnitt festgelegt, dessen Grenzen durch Elementdeskriptorfelder 11 vorgegeben wird.

Danach folgt der Verfahrensschritt 420. Es wird ein Iterationsschritt aufbereitet. Als vorgemerkter Zuweisungsblock wird ein Zuweisungsblock mit Länge Null vorgegeben.

Es folgt der Verfahrensschritt 430. Es wird geprüft, ob im Zuweisungsbereich ein Elementdeskriptorfeld 21 zuweisbar ist. Dazu werden die Elementdeskriptorfelder 21 gemäß ihrer Reihenfolge im Zuweisungsabschnitt des Elementdeskriptorfeldvektors 20 durchsucht und überprüft auf ihre Zuweisbarkeit. Es wird geprüft, ob ein Verweis 25 auf ein Textdeskriptorfeld 31 eingetragen ist. Im Textdeskriptorfeld 31 wird geprüft, ob ein Eintrag 34 größer Null eingetragen ist. Falls dies zutrifft, folgt der Verfahrensschritt 440, anderenfalls wird das nächstfolgende Elementdeskriptorfeld 21 geprüft. Falls kein derartiges zuweisbares Elementdeskriptorfeld 21 im Zuweisungsbereich auffindbar ist, folgt der Verfahrensschritt 480.

Sobald ein zuweisbares Elementdeskriptorfeld 21 im Zuweisungsbereich aufgefunden ist, folgt der Verfahrensschritt 440. Es wird geprüft, ob diesem Elementdeskriptorfeld 21 ein Elementdeskriptorfeld 11 im Zuweisungsbereich zuweisbar ist. Im Elementdeskriptorfeld 21 wird der Verweis 25 auf das Textdeskriptorfeld 31 gelesen. In diesem Textdeskriptorfeld 31 wird der Verweis 32 auf ein Elementdeskriptorfeld 11 gelesen. Es wird geprüft, ob dieses Elementdeskriptorfeld 11 im Zuweisungsbereich liegt. Falls dies der Fall ist, wird der Markierungseintrag 13 im Elementdeskriptorfeld 11 geprüft. Falls im Markierungseintrag 13 des Elementdeskriptorfeldes 11 vermerkt ist, daß dieses Elementdeskriptorfeld 11 zugewiesen werden kann, folgt der Verrfahrensschritt 450. Anderenfalls wird im Elementdeskriptorfeld 11 geprüft, ob ein Verweis 14 auf ein weiteres Elementdeskriptorfeld 11 eingetragen ist. Falls dies der Fall ist, wird überprüft, ob dieses Elementdeskriptorfeld 11 im Zuweisungsbereich liegt. Falls dies der Fall ist, wird, wie zuvor erläutert, überprüft, ob dieses Elementdeskriptorfeld 11 aufgrund seines Markierungseintrages 13 zuweisbar ist. Falls dies der Fall ist, folgt der Verfahrensschritt 450. Anderenfalls wird in diesem Elementdeskriptorfeld 11 geprüft, ob der Verweis 14 auf ein weiteres Deskriptorfeld 11 eingetragen ist. Für dieses wird ebenso überprüft, ob es im Zuweisungsbereich liegt, und ebenso, ob es zuweisbar ist. Falls im Zuweisungsbereich kein zuweisbares Elementdeskriptorfeld 11 auffindbar ist, folgt der Verfahrensschritt 470.

Sobald im Zuweisungsbereich ein Elementdeskriptorfeld 21 und ein diesem zuweisbares Elementdeskriptorfeld 11 ebenso im Zuweisungsbereich aufgefunden ist, folgt der Verfahrensschritt 450 Es wird die Länge des Zuweisungsblockes ermittelt. Es wird untersucht, ob das nächstfolgende Elementdeskriptorfeld 21 und das nächstfolgende Elementdeskriptorfeld 11 einander zugewiesen werden können. Falls dies der Fall ist, wird das jeweils nächstfolgende Elementdeskriptorfeld 21 und das jeweils nächstfolgende Elementdeskriptorfeld 11 untersucht, ob diese einander zugewiesen werden können. Sobald das nächstfolgende Elementdeskriptorfeld 21 und das nächstfolgende Elementdeskriptorfeld 11 einander nicht zugewiesen werden können, wird die Länge des soeben untersuchten Blockes festgehalten. Es folgt der Verfahrensschritt 451.

Im Verfahrensschritt 451 wird untersucht, ob die Länge des soeben untersuchten Zuweisungsblockes größer ist als die Länge eines vorgemerkten Zuweisungsblockes. Falls dies der Fall ist, folgt der Verfahrensschritt 452. Andernfalls folgt der Verfahrensschritt 460.

Falls die Länge des soeben untersuchten Zuweisungsblockes größer ist als die Länge eines vorgemerkten Zuweisungsblockes, folgt der Verfahrensschritt 452. Es wird der soeben untersuchte Zuweisungsblock vorgemerkt. Es folgt der Verfahrensschritt 460.

Im Verfahrensschritt 460 wird geprüft, ob im Elementdeskriptorfeld 11 ein Verweis 14 eingetragen ist auf ein weiteres Elementdeskriptorfeld 11. Für dieses Elementdeskriptorfeld 11 wird geprüft, ob es im Zuweisungsbereich liegt, und ob es aufgrund seines Markierungseintrages 13 zuweisbar ist. Falls dies der Fall ist, folgt der Verfahrensschritt 450. Andernfalls wird geprüft, ob ein weiteres Elementdeskriptorfeld 11 in einem Verweis 14 eingetragen ist. Falls kein weiteres zuweisbares Elementdeskriptorfeld 11 im Zuweisungsbereich aufgefunden werden kann, folgt der Verfahrensschritt 470.

Im Verfahrensschritt 470 wird geprüft, ob das nächstfolgende Elementdeskriptorfeld 21 im Zuweisungsbereich liegt, und ob es einem Elementdeskriptorfeld 11 zuweisbar ist. Falls dies der Fall ist, folgt der Programmabschnitt 440. Anderenfalls wird das jeweils nächstfolgende Elementdeskriptorfeld 21 ebenso überprüft. Falls kein weiteres Elementdeskriptorfeld 21 im Zuweisungsbereich zuweisbar ist, folgt der Verfahrensschritt 480.

Im Verfahrensschritt 480 wird geprüft, ob ein Zuweisungsblock mit einer Länge größer als Null vorgemerkt ist. Falls dies der Fall ist, folgt der Verfahrensschritt 481. Anderenfalls folgt der Verfahrensschritt 490.

Falls ein Zuweisungsblock mit einer Länge größer als Null vorgemerkt ist, folgt der Verfahrensschritt 481. Es werden die Elementdeskriptorfelder 21 und 11 dieses vorgemerkten größtmöglichen Zuweisungsblockes einander zugewiesen. Danach folgt der Verfahrensschritt 420.

Falls beim soeben durchgeführten Iterationsschritt kein Zuweisungsblock vorgemerkt werden konnte, also ein Zuweisungsblock mit einer Länge gleich Null vorgemerkt ist, so folgt der Verfahrensschritt 490.

Der Iterationsschritt wird beendet.

Es folgt der Verfahrensschritt 490.

Es wird untersucht, ob ein weiterer Zuweisungsbereich festlegbar ist, also beispielsweise nach einer bestimmten Methode einer von weiteren Zuweisungsbereichen aufzubereiten ist, oder beispielsweise alle Zuweisungsbereiche nach einer bestimmten Methode bereits aufbereitet sind, und nach einer beispielsweise weiteren Methode Zuweisungsbereiche aufzubereiten sind. Falls dies der Fall ist, folgt der Verfahrensschritt 410. Anderenfalls wird das zweite Zuweisungsverfahren 400 beendet.

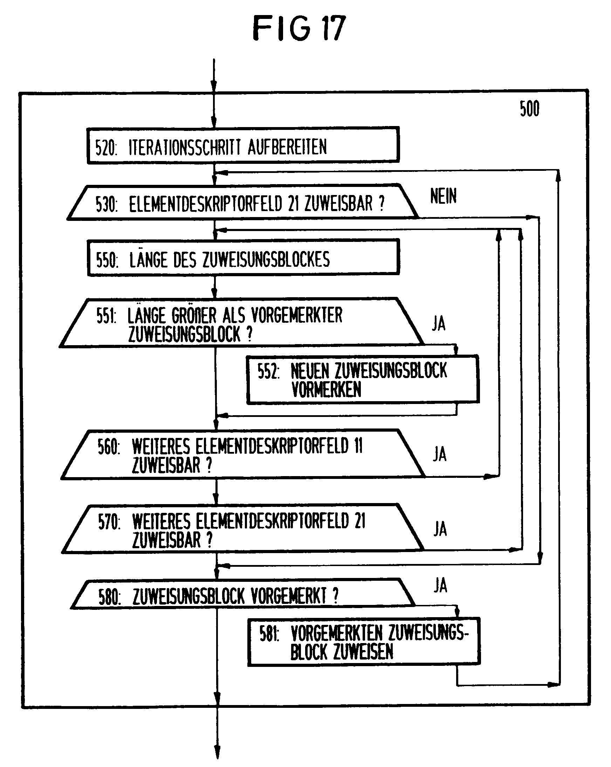

Anhand von Figur 17 wird das dritte Zuweisungsverfahren näher erläutert.

Wie die Figur 17 zeigt, besteht ein Ablaufübersichtflußdiagramm bei der Durchführung des dritten Zuweisungsverfahrens 500 aus mehreren Verfahrensschritten 510, 520, ... 581.

Am Beginn des dritten Zuweisungsverfahrens 500 wird der Verr fahrensschritt 520 ausgeführt. Es wird ein Iterationsschritt aufbereitet. Als Zuweisungsblock wird ein Zuweisungsblock mit einer Länge gleich Null vorgemerkt.

Es folgt der Verfahrensschritt 530. Es werden die Elementdeskriptorfelder 21 gemäß ihrer Reihenfolge im Elementdeskriptorfeldvektor 20 untersucht, ob ein Verweis 24 auf ein zugewiesenes Elementdeskriptorfeld 11 eingetragen ist, und falls dies nicht der Fall ist, wird der Verweis 25 auf das Textdeskriptorfeld 31 gelesen, in welchem geprüft wird, ob ein Eintrag 34 größer Null eingetragen ist. Falls dies der Fall ist, folgt der Verfahrensschritt 550. Anderenfalls, falls kein zuweisbares Elementdeskriptorfeld 11 aufgefunden werden kann, wird der Elementdeskriptorfeldvektor 20 weiter durchsucht nach nächstfolgenden Elementdeskriptorfeldern 21, deren Zuweisbarkeit, wie erläutert, überprüft wird. Falls kein zuweisbares Elementdeskriptorfeld 21 aufgefunden wird, folgt der Verfahrensschritt 580. Anderenfalls wurde ein Elementdeskriptorfeld 21 und ein Elementdeskriptorfeld 11 vorgefunden, welche einander zuweisbar sind, und es folgt der Verfahrens schritt 550.

Im Verfahrensschritt 550 wird die Länge des Zuweisungsblockes für diese beiden zuweisbaren Elementdeskriptorfelder 21 und 11 untersucht. Es wird geprüft, ob das jeweils nächstfolgende Elementdeskriptorfeld 21 und das jeweils nächstfolgende Elementdeskriptorfeld 11 einander zugewiesen werden können. Falls dies der Fall ist, wird das jeweils nächstfolgende Elementdeskriptorfeld 21 und das jeweils nächstfolgende Elementdeskriptorfeld 11 untersucht, ob diese einander zugewiesen werden können. Sobald ein nächstfolgendes Elementdeskriptorfeld 21 und ein nächstfolgendes Elementdeskriptorfeld 11 aufgefunden ist, welche einander nicht zugewiesen werden können, wird die Länge des Zuweisungsblockes festgehalten. Es folgt der Verfahrensschritt 551.

Im Verfahrensschritt 551 wird geprüft, ob die Länge des soeben untersuchten Zuweisungsblockes größer ist als die Länge eines vorgemerkten Zuweisungsblockes. Falls dies der Fall ist, folgt der Verfahrensschritt 552. Anderenfalls folgt der Verfahrensschritt 560.

Falls die Länge eines soeben untersuchten Zuweisungsblockes größer ist als die Länge eines vorgemerkten Zuweisungsblokkes, folgt der Verfahrensschritt 552. Der soeben untersuchte Zuweisungsblock wird als ein neuer größtmöglicher Zuweisungsblock vorgemerkt. Danach folgt der Verfahrensschritt 560.

Im Verfahrensschritt 560 wird untersucht, ob zum Elementdeskriptorfeld 21 anstelle des bisher untersuchten zuweisbaren Elementdeskriptorfeldes 11 ein weiteres Elementdeskriptorfeld 11 zuweisbar ist. Es wird der Verweis 14 des Elementdeskriptorfeldes 11 geprüft. Falls kein Verweis eingetragen ist oder dieser auf ein Elementdeskriptorfeld 11 verweist, dessen Markierungseintrag 13 anzeigt, daß dieses Elementdeskriptorfeld 11 nicht zuweisbar ist, wird der Verweis 14 für dieses Elementdeskriptorfeld 11 erneut geprüft. Falls ein weiteres zuweisbares Elementdeskriptorfeld 11 aufgefunden ist, folgt der Programmabschnitt 550. Anderenfalls, falls kein weiteres Deskriptorfeld 11 zuweisbar ist, folgt der Verfahrensschritt 570.

Im Verfahrensschritt 570 wird geprüft, ob ein weiteres Elementdeskriptorfeld 21, wie zuvor erläutert, zuweisbar ist. Falls dies der Fall ist, folgt der Verfahrensschritt 550. Anderenfalls folgt der Verfahrensschritt 580.

Im Verfahrensschritt 580 wird geprüft, ob ein Zuweisungsblock mit einer Länge größer Null vorgemerkt ist. Falls dies der Fall ist, folgt der Verfahrensschritt 581. Anderenfalls wird das dritte Zuweisungsverfahren 500 beendet.

Im Verfahrensschritt 581 wird ein vorgemerkter größtmöglicher Zuweisungsblock zugewiesen. Danach folgt der Verr fahrensschritt 520.

Im dritten Zuweisungsverfahren 500 werden alle zuweisbaren Elementdeskriptorfelder 21 und 11 geprüft. Somit ist eine maximale Anzahl von Zuweisungen für zuweisbare Elementdeskriptorfelder 21 und 11 erzielt.

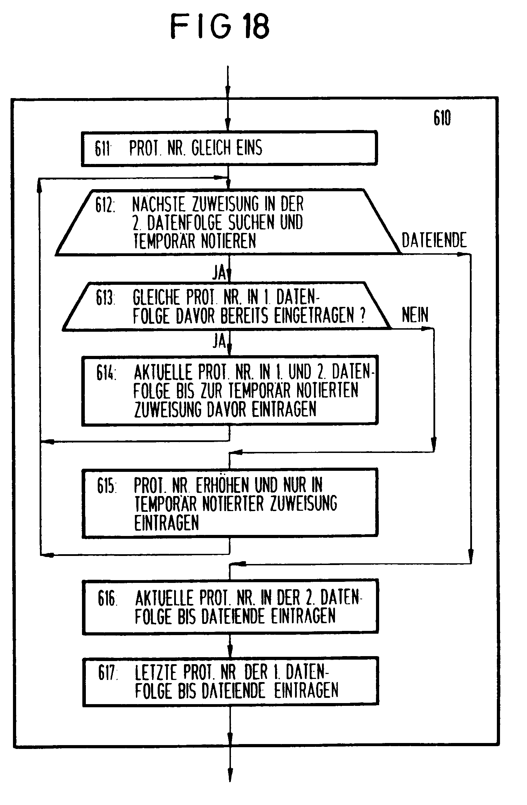

Anhand von Figur 18 wird ein im Protokollierungsverfahren 600 auswählbarer Blockvergleich 610 näher erläutert.

Wie die Figur 18 zeigt, wird am Beginn des Blockvergleiches 610 ein Verfahrensschritt 611 ausgeführt. Es wird als aktuelle Protokollierungsnummer diese gleich Eins gesetzt und vorgemerkt.

Es folgt der Verfahrensschritt 612. Es wird der zweite Elementdeskriptorfeldvektor 20 durchsucht bis eine nächste vorgefundene Zuweisung eines Elementdeskriptorfeldes 21 zu einem Elementdeskriptorfeldes 21 zu einem Elementdeskriptorfeld 11 aufgefunden ist. Diese beiden einander zugewiesenen Elementdeskriptorfelder 21 und 11 werden temporär notiert. In diesem Fall folgt der Verfahrensschritt 613. Anderenfalls, falls also bis zum Dateiende des Elementdeskriptorfeldvektors 20 keine weitere Zuweisung gefunden ist, so folgt der Verfahrensschritt 616.

Sowie die nächste vorgefundene Zuweisung temporär notiert ist, folgt der Verfahrensschritt 613. Es wird der erste Elementdeskriptorfeldvektor 10 ausgehend vom temporär notierten Deskriptor 11 in Richtung Dateianfang untersucht, bis ein zugewiesenes Elementdeskriptorfeld 11 vorgefunden ist. Für dieses wird untersucht, ob keine oder eine andere als die aktuelle vorgemerkte Protokollierungsnummer eingetragen ist. Falls dies der Fall ist, so folgt der Verfahrensschritt 615. Anderenfalls, also falls die aktuelle Protokollierungsnummer bereits eingetragen vorgefunden wird, oder falls bis zum Dateianfang kein zugewiesenes Elementdeskriptorfeld vorgefunden wird, so folgt der Verfahrensschritt 614.

Sowie davorliegend keine andere als die aktuelle Protokollierungsnummer vorgefunden wird, folgt der Verfahrensschritt 614. Es liegt keine Umstellung von Teilen der Datenfolgen vor, und die aktuelle Protokollierungsnummer wird demzufolge auch nicht verändert. Die aktuelle Protokollierungsnummer wird in die temporär notierten Elementdeskriptorfelder 11 und 21 eingetragen. Im ersten Elementdeskriptorfeldvektor 10 wird in die davorliegenden nicht zugewiesenen Elementdeskriptorfelder 11 die aktuelle Protokollierungsnummer eingetragen, bishin zu jenem zugewiesenen Elementdeskriptorfeld 11, in welches die aktuelle Protokollierungsnummer bereits eingetragen ist. Ebenso wird im zweiten Elementdeskriptorfeldvektor 20 in die davorliegenden nicht zugewiesenen Elementdeskriptorfelder 21 die aktuelle Protokollierungsnummer eingetragen, bishin zu jenem zugewiesenen Elementdeskriptorfeld 21, in welches die aktuelle Protokollierungsnummer bereits eingetragen ist. Dieses erfolgt bishin zum jeweiligen Dateianfang, falls dabei kein zugewiesenes Elementdeskriptorfeld vorgefunden wird. Anschließend folgt der Verfahrensschritt 612 mit der Suche nach den nächsten einander zugewiesenen Elementdeskriptorfeldern 11 und 21.

Sowie davorliegend eine andere als die aktuelle Protokollierungsnummer bereits eingetragen vorgefunden wird, folgt der Verfahrensschritt 615. Es liegt eine Umstellung von Teilen der Datenfolgen vor, und die aktuelle Protokollierungsnummer wird demzufolge um Eins hochgezählt. Diese hochgezählte aktuelle Protokollierungsnummer wird nur in die temporär notierten Elementdeskriptorfelder 11 und 21 eingetragen. Anschließend folgt der Verfahrensschritt 612 mit der Suche nach den nächsten einander zugewiesenen Elementdeskriptorfeldern 11 und 21.

Falls keine nächsten einander zugewiesenen Elementdeskriptorfelder 11 und 21 mehr vorgefunden werden, und somit das Dateiende des zweiten Elementdeskriptorfeldvektors 20 erreicht ist, folgt der Verfahrensschritt 616. Ausgehend vom Dateiende wird in Richtung Dateianfang im zweiten Elementdeskriptorfeldvektor 20 in vorgefundene nicht zugewiesene Elementdeskriptorfelder 21 die aktuelle Protokollierungsnummer eingetragen, bishin zu jenem zugewiesenen Elementdeskriptorfeld 21, in welches die aktuelle Protokollierungsnummer bereits eingetragen ist. Dieses erfolgt bishin zum Dateianfang, falls dabei kein zugewiesenes Elementdeskriptorfeld vorgefunden wird. In diesem Fall ist die aktuelle Protokollierungsnummer gleich Eins, da es offenbar keine zugewiesenen Elementdeskriptorfelder gibt.

Anschließend folgt der Verfahrensschritt 617. Ausgehend vom Dateiende wird in Richtung Dateianfang im ersten Elementdeskriptorfeldvektor 10 nach einem vorgefundenen zugewiesenen Elementdeskriptorfeld 11 gesucht, dessen eingetragene Protokollierungsnummer ausgelesen wird. Diese Protokollierungsnummer wird ausgehend von diesem vorgefundenen Elementdeskriptorfeld 11 bishin zum Dateiende in die nicht zugewiesenen Elementdeskriptorfelder 11 eingetragen. Falls kein zugewiesenes Elementdeskriptorfeld bishin zum Dateianfang gefunden werden kann, so wird in alle Elementdeskriptorfelder 11 die aktuelle Protokollierungsnummer eingetragen, welche in diesem Fall also gleich Eins ist.

Der Blockvergleich 610 ist beendet. Zusätzlich soll noch erwähnt werden, daß dieser Blockvergleich 610 symmetrisch ist bezüglich einer Vertauschung der beiden Datenfolgen.

## Patentansprüche

1. Verfahren zum maschinellen Ermitteln von in zwei Datenfolgen enthaltenen gleichen Datenelementen,
mit folgenden Schritten:
a) es wird ein Aufbereitungsverfahren (90) so ausgeführt, daß zu jedem Datenelement der ersten Datenfolge ein erstes Elementdeskriptorfeld (11), sowie zu jedem Datenelement der zweiten Datenfolge ein zweites Elementdeskriptorfeld (21) und zu allen jeweils gleichen Datenelementen von beiden Datenfolgen je ein gemeinsames Textdeskriptorfeld (31) aufbereitet wird,
wobei
a1) das erste Elementdeskriptorfeld wenigstens einen Statuseintraq (12) für die Zuweisbarkeit des Datenelementes, einen Markierungseintrag (13) über eine erfolgte Zuweisung und einen Verweis (15) auf ein Textdeskriptorfeld (31) des jeweiligen Datenelementes aufweist,
a2) das zweite Elementdeskriptorfeld (21) wenigstens einen Statuseintrag (22) für die Zuweisbarkeit des Datenelementes, einen Markierungseintrag (23) über eine erfolgte Zuweisung und einen Verweis (25) auf das Textdeskriptorfeld (31) des jeweiligen Datenelementes aufweist,
a3) das Textdeskriptorfeld (31) wenigstens einen Verweis (32, 33) auf die jeweiligen zugeordneten Datenelemente der ersten bzw. zweiten Datenfolge und einen Eintrag (36) der zu vergleichenden Textinformationen des zugeordneten Datenelementes aufweist,
b) es werden in einem ersten Zuweisungsverfahren (300) gleiche Datenelemente der beiden Datenfolgen paarweise als gleich zugeordnet, indem in Abhängigkeit des Textdeskriptorfeldes eines der Datenelemente von einer der Datenfolgen einem gleichen Datenelement von der zweiten Datenfolge zugewiesen wird, c) es wird wenigstens ein weiteres Zuweisungsverfahren (400, 500) für noch nicht zugewiesene Datenelemente durchgeführt, bei welchem in wenigstens einem Zuweisungsbereich aus noch nicht zugeordneten Datenelementen der beiden Datenfolgen über die Verweise im Deskriptorfeld (31) paarweise zuordenbare Datenelemente iterativ einander zugewiesen werden, indem bei jedem der Iterationsschritte ein jeweils größtmöglicher Zuweisungsblock mit in beiden Datenfolgen aufeinanderfolgenden paarweise zuordenbaren Datenelementen zugewiesen wird.

2. Verfahren nach Anspruch 1,
**gekennzeichnet** durch solche
Zuweisungsbereiche, welche durch jeweils einander zugewiesene Datenelemente begrenzt werden.

3. Verfahren nach Anspruch 1,
dadurch **gekennzeichnet**,
daß vorgefundene Zuweisungslücken, welche durch jeweils beliebig zugewiesene Datenelemente begrenzt werden, sequentiell assoziativ einander als Zuweisungsbereich zugewiesen werden.

4. Verfahren nach Anspruch 1,
dadurch **gekennzeichnet**,
daß bestimmte als Abschnittsmarkierungen vorgefundene Datenelemente zur Begrenzung von Zuweisungsbereichen verwendet werden.

5. Verfahren nach einem der Ansprüche 1 bis 4,
**gekennzeichnet** durch
ein abschließendes Zuweisungsverfahren (500), bei welchem als der Zuweisungsbereich die beiden gesamten Datenfolgen verwendet werden.

6. Verfahren nach Anspruch 5,
dadurch **gekennzeichnet**,
a) daß für eine erste der zu vergleichenden Datenfolgen ein erster Elementdeskriptorfeldvektor (10) verwendet wird, welcher für jedes Datenelement der ersten Datenfolge je ein zugeordnetes erstes Elemendeskriptorfeld (11) aufweist, für welches zusätzlich zu den in Anspruch 1 vorgesehenen Komponenten ein Verweis (14) auf das Elementdeskriptorfeld (11) eines nächsten gleichen Datenelementes vorgesehen ist,
b) daß für eine zweite der zu vergleichenden Datenfolgen ein zweiter Elementdeskriptorfeldvektor (20) verwendet wird, welcher für jedes Datenelement der zweiten Datenfolge je ein zugeordnetes zweites Elementdeskriptorfeld (21) aufweist, für welches zusätzlich zu den in Anspruch 1 vorgesehenen Komponenten ein Verweis (24) auf das erste Elementdeskriptorfeld (11) eines zugewiesenen gleichen Datenelementes vorgesehen ist,
c) daß für beide zu vergleichenden Datenfolgen ein Textdeskriptorfeldvektor (30) verwendet wird, welcher für alle jeweils gleichen Datenelemente aus beiden Datenfolgen je ein gemeinsames zugeordnetes Textdeskriptorfeld (31) aufweist, für welches folgende Komponenten vorgesehen sind:
Verweis (32) auf dasjenige Elementdeskriptorfeld (11) des ersten Elementdeskriptorfeldvektors (10), welches dem ersten Auftreten des dem Textdeskriptorfeld (31) zugeordneten Datenelements zugeordnet ist; Verweis (33) auf dasjenige Elementdeskriptorfeld (21) des zweiten Elementdeskriptorfeldvektors (20), welches dem letzten Auftreten des dem Textdeskriptorfeld (31) zugeordneten Datenelements zugeordnet ist; Eintrag (34), welcher die Gesamtanzahl enthält, mit welcher das zugeordnete Datenelement in der ersten Datenfolge vorkommt; Eintrag (35), welcher die Gesamtanzahl enthält, mit welcher das zugeordnete Datenelement in der zweiten Datenfolge vorkommt; Eintrag (36) der zu vergleichenden Information des zugeordneten Datenelementes.

7. Verfahren nach Anspruch 6,
dadurch **gekennzeichnet**,
daß ein Hashcodierungsverfahren (200) durchgeführt wird, bei welchem zu jedem Hashcodierungseintrag ein verweis auf die hierbei eingetragenen Datenelemente erzeugt wird, so daß bei einem Vergleich die Datenelemente über einen gleichen Hashcodierungseintrag vorsortiert aufgefunden werden und nachfolgend ein direkter Vergleich der Datenelemente ermöglicht wird.

8. Verfahren nach Anspruch 7,
dadurch **gekennzeichnet**,
a) daß für beide zu vergleichenden Datenfolgen ein Hashcodierungsvektor (40) gebildet wird, welcher für jedes codierte Datenelement einen Hashcodierungseintrag (41) aufweist;
b) daß zu jedem Hashcodierungseintrag (41) ein Verweisvektor (50) gebildet wird, welcher einen Verweis (51) auf jenes Textdeskriptorfeld (31) aufweist, in welchem die jeweils hashcodierte Information (36) enthalten ist, so daß bei unterschiedlicher Information (36) und gleichem Hashcodierungseintrag (41) im Verweisvektor (50) als eine jeweils weitere Komponente ein Verweis (51) auf ein Textdeskriptorfeld (31) eingetragen wird.

9. Verfahren nach einem der Ansprüche 1 bis 8,
dadurch **gekennzeichnet**,
daß Datenelemente einer Originaldateninformation bearbeitet werden, welche in einem Filterverfahren (100) als die zu vergleichenden Datenelemente für das Zuweisungsverfahren aufbereitet werden.

10. Verfahren nach einem der Ansprüche 1 bis 9,
dadurch **gekennzeichnet**,
daß für jedes in den beiden Datenfolgen vorkommende zuweisbare unterschiedliche Datenelement seine Häufigkeit als Gesamtanzahl für jede von beiden Daten folgen ermittelt wird, und daß daraus eine Maximalanzahl von zuweisbaren Datenelementen ermittelt wird, indem für alle zuweisbaren Datenelemente jene Häufigkeit für eine von den beiden Datenfolgen aufsummiert wird, welche kleiner gleich ist der Häufigkeit für die andere der beiden Datenfolgen.

11. Verfahren nach Anspruch 10,
dadurch **gekennzeichnet**,
daß sobald die Anzahl der zugewiesenen Datenelemente die Maximalanzahl von zuweisbaren Datenelementen erreicht, und somit keine weiteren Datenelemente mehr zuweisbar sind, ein Protokollierungsverfahren (600) durchgeführt wird, bei welchem das Ergebnis ausgegeben wird.

12. Verfahren nach Anspruch 11,
dadurch **gekennzeichnet**,
daß beim Protokollierungsverfahren (600) ein Blockvergleich (610) mittels Einträgen (17, 27) von Protokollierungsnummern zur Erkennung von blockweise umgestellten Teilen der Datenfolgen erfolgt.

## Claims

1. A method for the automatic determination of identical data elements contained in two data sequences,
having the following steps:
a) a pre-processing procedure (90) is executed in such a way that a first element descriptor field (11) is pre-processed for each data element of the first data sequence, and a second element descriptor field (21) is pre-processed for each data eiement of the second data sequence, and in each case one common text descriptor field (31) is pre-processed for all the identical data elements of the two data sequences in each case,
in which
al) the first element descriptor field contains at least one status entry (12) for the assignability of the data element, a marking entry (13) relating to a performed assignment, and a reference (15) to a text descriptor field (31) of the respective data element,
a2) the second element descriptor field (21) contains at least one status entry (22) for the assignability of the data element, a marking entry (23) relating to a performed assignment, and a reference (25) to the text descriptor field (31) of the respective data element,
a3) the text descriptor field (31) contains at least one reference (32, 33) to the respective allocated data elements of the first and second data sequence respectively, and an entry (36) of the text information to be compared belonging to the allocated data element,
b) in a first assignment procedure (300), identical data elements of the two data sequences are allocated in pairs as identical, in that, depending on the text descriptor field, one of the data elements of one of the data sequences is assigned to an identical data element of the second data sequence,
c) at least one further assignment procedure (400, 500) for as yet unassigned data elements is performed, in which, in at least one assignment area of as yet unallocated data elements of the two data sequences, data elements that can be allocated in pairs are iteratively assigned to one another via the references in the descriptor field (31), in that during each of the iterative steps, a respective largest possible assignment block with successive data elements that can be allocated in pairs in both data sequences is assigned.

2. The method as claimed in claim 1, characterised by assignment areas that are delimited by data elements assigned to one another in each case.

3. The method as claimed in claim 1, characterised in that assignment gaps, which have been and which are delimited by arbitrarily assigned data elements in each case, are assigned sequentially and associatively to one another as assignment area.

4. The method as claimed in claim 1, characterised in that specific data elements found as section markers are used to delimit assignment areas.

5. The method as claimed in one of claims 1 to 4, characterised by a final assignment procedure (500), in which the two entire data sequences are used as the assignment area.

6. The method as claimed in claim 5, characterised in that
a) a first element descriptor field vector (10) is used for a first of the data sequences to be compared, which vector has for each data element of the first data sequence an allocated first element descriptor field (11) in each case, for which the following components are pr:
status entry (12), marking entry (13), reference (14) to the element descriptor field of a next identical data element, reference (15) to a text descriptor field (31) of the respective data element,
b) a second element descriptor field vector (20) is used for a second of the data sequences to be compared, which vector has for each data element of the second data sequence an allocated second element descriptor field (21) in each case, for which the following components are provided:
status entry (22), marking entry (23), reference (24) to the first element descriptor field (11) of an assigned identical data element, reference (25) to the text descriptor field (31) of the respective data element,
c) a text descriptor field vector (30) is used for both data sequences to be compared, which vector has in each case a common allocated text descriptor field (31) for all respective identical data elements from both data sequences, for which the following components are provided:
reference (32) to the first element descriptor field (11) of the first data sequence for the first occurrence of the respective allocated data element, reference (33) to the last element descriptor field (21) of the second data sequence for the last occurrence of the respective allocated data element, entry (34) of the total number of occurrences of the allocated data element within the first data sequence, entry (35) of the total number of occurrences of the allocated data element within the second data sequence, entry (36) of the text information to be compared belonging to the allocated data element.

7. The method as claimed in claim 6, characterised in that a hash coding procedure (200) is performed, in which a reference to the data elements entered hereby is generated for each hash coding entry, so that in a comparison the data elements are found pre-sorted via an identical hash coding entry, and a direct comparison of the data elements is subsequently possible.

8. The method as claimed in claim 7, characterised in that
a) a hash coding vector (40) is formed for both data sequences to be compared, which vector has one hash coding entry (41) for each coded data element,
b) a reference vector (50) is formed for each hash coding entry (41), which vector has a reference (51) to the text descriptor field (31) that contains the respective hashcoded information (36), so that if the information (36) is different and the hash coding entry (41) is identical, a reference (51) to a text descriptor field (31) is entered in the reference vector (50) as a respective further component.

9. The method as claimed in one of the claims 1 to 8, characterised in that data elements of an original data information item are processed, which data elements are pre-processed for the assignment procedure in a filtering procedure (100) as the data elements to be compared.

10. The method as claimed in one of the claims 1 to 9, characterised in that, for each assignable different data element occurring in both data sequences, its frequency is determined as the total number for each of the two data sequences, and from this a maximal number of assignable data elements is determined, in that the frequency that is less than or equal to the frequency for the other of the two data sequences is totalled for one of the two data sequences for all assignable data elements.

11. The method as claimed in claim 10, characterised in that as soon as the number of assigned data elements reaches the maximal number of assignable data elements, and hence no further data elements can be assigned, a logging procedure (600) is performed, with which the result is output.

12. The method as claimed in claim 11, characterised in that a block comparison (610) is performed during the logging procedure (600) by means of entries (17, 27) of log numbers for detecting block rearrangements of parts of the data sequences.

## Revendications

1. Procédé pour la détermination mécanisée d'éléments de données identiques contenus dans deux séquences de données,
consistant des pas suivantes:
a) un procédé du préparation (90) est effectué de telle manière, que pour chaque élément de données de la première séquence de données est préparé un premier champ de descripteur d'élément (11), pour chaque élément de données de la deuxième séquence de données est préparé un deuxième champ de descripteur d'élément (21) et pour tous les éléments de données égales contenus dans les deux séquences de données est respectivement préparé un champ de descripteur de texte commun (31),
près de quoi
al) le premier champ de descripteur d'élément (11) contient au moins un enregistrement d'état (12) pour indiquer l'affectabilité d'élément de données, un enregistrement de marquage (13) pour indiquer une affectation effectué et un pointeur (15) à un champ de descripteur de texte (31) pour l'élément de données respectif,
a2)le deuxième champ de descripteur d'élément (21) contient au moins un enregistrement d'état (22) pour indiquer l'affectabilité d'élément de données, un enregistrement de marquage (23) pour indiquer une affectation effectué et un pointeur (25) à un champ de descripteur de texte (31) pour l'élément de données respectif,
a3) le champ de descripteur de texte (31) contient au moins des pointeurs (32, 33) aux éléments de données associé de la séquence de données première resp. deuxième et un enregistrement (36) d'information de texte à comparé d'élément de données associé,
b) un procédé d'affectation premier (300) associes par paires en qualité d'égalité des éléments de données identiques contenus dans les deux séquences de données, en affectant par dépendance du champ de descripteur de texte un des éléments de données d'une des séquences de données à un élément égale d'autre séquence de données,
c) au moins un procédé d'affectation additionnel (400, 500) est effectué pour les éléments de données pas affectés, près de quoi des éléments de données, qui sont associable par paires, sont affecté itérativement l'un à l'autre dans au moins une zone d'affectation en utilisant les pointeurs du champ de descripteur (31), en affectant dans chaque pas d'itération un bloc d'affectation plus grand, qui contient des éléments de données, qui sont consécutif dans les deux séquences de données et associable par paires.

2. Procédé suivant prétention 1,
**caractérisé** par
des zones d'affectation, qui sont limité par des éléments de données affectés respectivement l'un à l'autre.

3. Procédé suivant prétention 1,
**caractérisé** de cette manière,
que des brèches d'affectation trouvés, qui sont limité par quelconques éléments de données affectés, sont affecté l'un à l'autre comme des zones d'affectation dans une manière séquentiel et associatif.

4. Procédé suivant prétention 1,
**caractérisé** de cette manière,
que des éléments de données déterminés, qui sont trouvé en qualité des marquages de secteur, sont employé pour la délimination des zones d'affectation.

5. Procédé suivant une des prétentions 1 à 4,
**caractérisé** par
un procédé d'affectation final (500), près de quoi les deux séquences de données sont complètement employé comme la zone d'affectation.

6. Procédé suivant prétention 5,
**caractérisé** par
a) un premier vecteur de champ de descripteur d'élément (10) est employé pour une première des séquences de données, qui sont comparé, et cet vecteur contient respectivement pour chaque élément de données de la séquence de données première un premier champ de descripteur d'élément associé (11), qui contient tous les composantes décrit en prétention 1 et un pointeur (14) additionnel au champ de descripteur d'élément (11) d'un élément de données égal plus prochain,
b) un deuxième vecteur de champ de descripteur d'élément (20) est employé pour une deuxième des séquences de données, qui sont comparé, et cet vecteur contient respectivement pour chaque élément de données de la séquence de données deuxième un deuxième champ de descripteur d'élément associé (21), qui contient tous les composantes décrit en prétention 1 et un pointeur (24) additionnel au premier champ de descripteur d'élément (11) d'un élément de données égal, qui est déjà affecté,
c) un vecteur de champ de descripteur de texte est employé pour les deux séquences de données, qui sont comparé, et cet vecteur contient respectivement pour tous les éléments de données égales contenus dans les deux séquences de données un champ de descripteur de texte associé commun (31), qui contient les composantes suivantes:
pointeur (32) à cet champ de descripteur d'élément (11) du premier vecteur de champ de descripteur d'élément (10), qui est associé avec le premier apparition celui élément de données associé avec le champ de descripteur de texte (31);
pointeur (33) à cet champ de descripteur d'élément (21) du deuxième vecteur de champ de descripteur d'élément (20), qui est associé avec le dernier apparition celui élément de données associé avec le champ de descripteur de texte (31);
enregistrement (34), qui contient le nombre total d'apparition d'élément de données associé dans la première séquence de données; enregistrement (35), qui contient le nombre total d'apparition d'élément de données associé dans la deuxième séquence de données; enregistrement (36) d'information à comparer d'élément de données associé.

7. Procédé suivant prétention 6,
**caractérisé** de cette manière,
qu'un procédure de codage haché (200) est effectué, près de quoi pour chaque enregistrement de codage haché est produit un pointeur aux éléments de données enregistrés ci-inclus, de sorte que lors d'une comparaison les éléments de données sont trouvé trié et par suite une comparaison directe des éléments de données est rendu possible.

8. Procédé suivant prétention 7,
**caractérisé** de cette manière,
a) que pour les deux séquences de données est créé un vecteur de codage haché (40), qui contient un enregistrement de codage haché (41) pour chaque élément de données codé;
b) que pour chaque enregistrement de codage haché (41) est créé un vecteur de renvoyage (50), qui contient un pointeur (51) à cet champ de descripteur de texte (31), qui contient l'information codé haché (36) respectif, de sorte que lors d'information (36) différent et enregistrement de codage haché (41) identique un pointeur (51) à un champ de descripteur de texte (31) est enregistré respectivement en composante additive.

9. Procédé suivant une des prétentions 1 à 8,
**caractérisé** de cette manière,
que des éléments de données d'information de données originale sont traité, qui sont préparé dans un procédé de filtration (100) pour le procédé d'affectation en éléments de données à comparer.

10. Procédé suivant une des prétentions 1 à 9,
**caractérisé** de cette manière,
que pour chaque élément de données, différent et affectable, contenu dans les deux séquences de données est calculé sa fréquence en nombre total pour chaque des deux séquences de données, et qu'un nombre maximal des éléments de données affectables est calculé depuis cette fréquence, en sommant pour tous les éléments de données affectables cette fréquence pour en des deux séquences de données, qui est plus petite ou égale que la fréquence pour l'autre des deux séquences de données.

11. Procédé suivant prétention 10,
**caractérisé** de cette manière,
que aussitôt que le nombre des éléments de données affectés atteint le nombre maximal des éléments de données affectables, et par conséquent pas des éléments de données additionnels sont encore affectable, un procédé de protocolage (600) est effectué, près de quoi le résultat est sorti.

12. Procédé suivant prétention 11,
**caractérisé** de cette manière,
que près du procédé de protocolage (600) une comparaison de bloc (610) est effectué par des enregistrements (17, 27) des numéros de protocolage pour reconnaître telles parties des séquences de données, qui sont transposés par blocs.
